(19) Europäisches Patentamt
European Patent Office
Office européen des brevets

(11) **EP 3 924 758 B1**

(12) **EUROPÄISCHE PATENTSCHRIFT**

(45) Veröffentlichungstag und Bekanntmachung des Hinweises auf die Patenterteilung:
**23.11.2022  Patentblatt 2022/47**

(21) Anmeldenummer: **20705363.8**

(22) Anmeldetag: **14.02.2020**

(51) Internationale Patentklassifikation (IPC):
**G02B 1/11** *(2015.01)*  **B29D 11/00** *(2006.01)*
**G02C 7/06** *(2006.01)*  **B33Y 30/00** *(2015.01)*
**G02C 7/02** *(2006.01)*

(52) Gemeinsame Patentklassifikation (CPC):
**G02B 1/11; B29D 11/00355; B33Y 30/00; G02C 7/022;** G02C 2202/12

(86) Internationale Anmeldenummer:
**PCT/EP2020/053967**

(87) Internationale Veröffentlichungsnummer:
**WO 2020/165439 (20.08.2020 Gazette 2020/34)**

(54) **REFRAKTIVES OPTISCHES BAUELEMENT UND DARAUS HERGESTELLTES BRILLENGLAS, VERFAHREN ZUR HERSTELLUNG EINES REFRAKTIVEN OPTISCHEN BAUELEMENTS, COMPUTERPROGRAMMPRODUKT, AUF EINEM DATENTRÄGER ABGESPEICHERTE BAUDATEN EINES BRILLENGLASES, GERÄT ZUR ADDITIVEN HERSTELLUNG EINES GRUNDKÖRPERS UND BRILLENGLAS**

REFRACTIVE OPTICAL COMPONENT AND RESULTING SPECTACLE LENS, METHOD FOR PRODUCING A REFRACTIVE OPTICAL COMPONENT, COMPUTER PROGRAM PRODUCT, CONSTRUCTION DATA STORED ON A DATA CARRIER, DEVICE FOR ADDITIVE MANUFACTURING OF A BASE BODY AND SPECTACLE LENS

COMPOSANT OPTIQUE DE RÉFRACTION ET VERRE DE LUNETTES FABRIQUÉ À PARTIR DUDIT COMPOSANT, PROCÉDÉ DE FABRICATION D'UN COMPOSANT OPTIQUE DE RÉFRACTION, PRODUIT PROGRAMME INFORMATIQUE, DONNÉES DU VERRE DE LUNETTES MÉMORISÉES SUR UN SUPPORT DE DONNÉES, APPAREIL DESTINÉ À LA FABRICATION ADDITIVE D'UN CORPS DE BASE ET VERRE DE LUNETTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.02.2019  EP 19157212**

(43) Veröffentlichungstag der Anmeldung:
**22.12.2021  Patentblatt 2021/51**

(73) Patentinhaber:
• **Carl Zeiss AG**
**73447 Oberkochen (DE)**
• **Carl Zeiss Vision International GmbH**
**73430 Aalen (DE)**

(72) Erfinder:
• **TOTZECK, Michael**
**73525 Schwäbisch Gmünd (DE)**
• **HAIDL, Markus**
**73431 Aalen (DE)**

(74) Vertreter: **Rau, Schneck & Hübner Patentanwälte Rechtsanwälte PartGmbB Königstraße 2 90402 Nürnberg (DE)**

(56) Entgegenhaltungen:
DE-B4-102009 004 377     DE-C1- 10 113 466
US-A1- 2015 153 589     US-A1- 2016 311 184

**Beschreibung**

Die Erfindung betrifft ein refraktives optisches Bauelement. Außerdem betrifft die Erfindung ein daraus hergestelltes Brillenglas. Weiter betrifft die Erfindung ein Verfahren zur Herstellung eines refraktiven optischen Elements und ein verfahrensgemäß hergestelltes Brillenglas. Schließlich betrifft die Erfindung ein Computerprogrammprodukt zur Durchführung eines Verfahrens zur Herstellung eines refraktiven optischen Elements, ein Gerät zur additiven Herstellung eines Grundkörpers und ein Brillenglas, sowie auf einem Datenträger abgespeicherte Baudaten eines entsprechenden Grundkörpers.

Es ist möglich, optische Komponenten durch additive Fertigungsverfahren herzustellen. Exemplarisch sei hierfür auf die WO 2015/092 016 A1, die US 2005/004 6957 A1 und die WO 2016/188 930 A1 verwiesen. Hierbei kann es herstellungsbedingt zu unerwünschten Effekten, beispielsweise Streueffekten, kommen, welche sich negativ auf die optischen Eigenschaften der Komponenten auswirken.

Aus der EP 0 341 998 A1 ist eine Multifokallinse bekannt. Aus der WO 2008/051 578 A2 und der WO 2008/051 592 A2 sind mehrschichtige Linsen bekannt. Aus der US 2015/153589 A1, der US 2015/153589 A1, der DE 10 2009 004377 B4, der DE 10 2009 004 377 B4, der DE 10 2009 004 379 B4 und der DE 10 2009 004 380 B4 sind Verfahren zum Herstellen eines Brillenglases mittels eines additiven Fertigungsverfahrens bekannt. Aus diesen Patenten ist insbesondere die lagenweise Herstellung eines Brillenglases bekannt. Die US 2016/311184 A1 offenbart hierbei, dass bei der Herstellung einzelne Lagen eine variable Dicke entlang einer Richtung quer zur optischen Achse aufweisen können.

Es ist eine Aufgabe der Erfindung, ein refraktives optisches Element zu verbessern.

Es ist eine Aufgabe der Erfindung, ein refraktives optisches Bauelement mit verbesserten Streueigenschaften auszubilden. Aufgabe der Erfindung ist , das refraktive optische Bauelement derart auszubilden, dass die Entstehung von Streulicht verringert, insbesondere verhindert wird.

Diese Aufgabe wird durch ein refraktives optisches Bauelement gemäß Anspruch 1 gelöst.

Ein Kern der Erfindung besteht darin, ein refraktives optisches Bauelement mit einem in einem 3D-Druckverfahren hergestellten Grundkörper, der eine Vorderseite und eine Rückseite und eine senkrecht zur Vorderseite und/oder Rückseite stehende Hauptachse aufweist, und der eine Mehrzahl sich zwischen der Vorderseite und der Rückseite erstreckender optischer Lagen aufweist, die jeweils eine Dicke in Richtung parallel zur Hauptachse im Bereich von 1 $\mu$m bis 100 $\mu$m aufweisen, wobei die Lagen aufeinander aufgebracht sind, wobei die Anzahl der optischen Lagen über die Erstreckung des optischen Bauelements quer zur Hauptachse konstant ist, wobei sich jede der Lagen in zu der Hauptachse senkrechten Richtungen über einen für alle Lagen gemeinsamen Bereich erstreckt, der mindestens um einen Faktor 10 größer als die maximale Dicke der jeweiligen Lage ist, wobei die Dicke der Lagen über ihre Erstreckung quer zur Hauptachse variiert, und wobei der Grundkörper einen wenigstens in Richtung parallel zur Hauptachse modulierten Brechzahlverlauf aufweist mit einer Mehrzahl von Maxima und Minima, einem Abstand zwischen benachbarten Maxima und Minima im Bereich von 0,5 $\mu$m und 100 $\mu$m und einem Brechzahlhub $\Delta$n zwischen benachbarten Maxima und Minima im Bereich von $10^{-4}$ und 0,3, und wobei eine Anzahl an Maxima im Brechzahlverlauf innerhalb einer gegebenen Lage in Richtungen quer zur Hauptachse kleiner ist als 20.

Es hat sich gezeigt, dass ein derartiges Bauelement besonders günstige Streueigenschaften aufweist.

Die Lagen sind quer zur Hauptachse ausgerichtet. Sie weisen quer zur Hauptachse verlaufende Grenzflächen auf.

Der maximale Brechzahlhub $\Delta$n in Richtung parallel zur Hauptachse beträgt insbesondere höchstens 0,2, insbesondere höchstens 0,1, insbesondere höchstens 0,05, insbesondere höchstens 0,03, insbesondere höchstens 0,02, insbesondere höchstens 0,01, insbesondere höchstens 0,005, insbesondere höchstens 0,003, insbesondere höchstens 0,002, insbesondere höchstens 0,001. Es kann insbesondere angestrebt werden, einen Brechzahlhub, welcher fertigungsbedingt an der Grenzfläche zwischen zwei benachbarten Lagen entstehen kann, so gering wie möglich zu halten.

Die Anzahl der Lagen, insbesondere deren Anzahl in Richtung parallel zur Hauptachse, liegt insbesondere im Bereich von 5 bis 100000. Die Anzahl der Lagen, insbesondere die Anzahl von Maxima im Brechzahlverlauf in Richtung parallel zur Hauptachse, beträgt insbesondere mindestens 50, insbesondere mindestens 100. Sie beträgt vorzugsweise höchstens 10000, insbesondere höchstens 5000, insbesondere höchstens 3000, insbesondere höchstens 1000.

Die Anzahl der Lagen ist unter anderem von der Tröpfchengröße des Werkstoffes zur Herstellung der Lagen abhängig. Der Durchmesser der Tröpfchen des Werkstoffes zur Herstellung der Lagen kann insbesondere im Bereich von 1 $\mu$m bis 100 $\mu$m liegen. Kleinere Tröpfchen ermöglichen eine präzisere Herstellung der Lagen. Größere Tröpfchen können zu einer Reduzierung der zur Herstellung des Grundkörpers benötigten Zeit führen.

Die Tröpfchengröße kann beispielsweise über einen Piezodruck präzise gesteuert werden. Für Details sei beispielsweise auf die US 2010/0110132 A1 verwiesen.

Die Anzahl an Maxima im Brechzahlverlauf innerhalb einer gegebenen Lage in Richtungen quer zur Hauptachse ist vorzugsweise höchstens 10, insbesondere höchstens 5. Sie kann auch höchstens 3, insbesondere höchstens 2 betragen.

Der Brechzahlverlauf innerhalb einer gegebenen Lage kann insbesondere homogen sein, insbesondere keine Extrema aufweisen. Stets auftretende Schwankungen der Brechzahlen seien hierbei unberücksichtigt. Insbesondere seien Schwankungen der Brechzahl innerhalb eines Bereichs von drei Standardabweichungen um deren Mittelwert oder Schwankungen um bis zu $\Delta n \leq 10^{-4}$ in Volumenelementen mit einer Seitenlänge von 10 μm unberücksichtigt.

Der Grundkörper kann insbesondere mittels eines lageweisen 3D-Druckverfahrens, insbesondere eines Multi-Jet Modelling Verfahrens (MJM-Verfahrens) oder mittels eines volumetrischen additiven Verfahrens hergestellt werden.

Als Lage wird insbesondere ein Bereich bezeichnet, der in einem gemeinsamen Verfahrensschritt aufgebracht und/oder ausgehärtet wird. Aufeinanderfolgende Lagen werden insbesondere sukzessive aufeinander aufgebracht und ausgehärtet. Eine Lage kann insbesondere einfach zusammenhängend ausgebildet sein. Dies ist jedoch nicht zwingend der Fall.

Die Lagen, weisen gekrümmte Oberflächen beziehungsweise Grenzflächen auf. Für Details wird auf die weitere Beschreibung verwiesen.

Die Lagen erstrecken sich in zu der Hauptachse senkrechten Richtungen über einen für alle Lagen gemeinsamen Bereich, der die gesamte Erstreckung des optischen Bauelements quer zur Hauptachse umfasst. Dieser Bereich ist um mindestens einen Faktor 10 größer als die maximale Dicke der jeweiligen Lage. Er kann um einen Faktor von mindestens 20, insbesondere mindestens 30, insbesondere mindestens 50, insbesondere mindestens 100 größer sein als die maximale Dicke der jeweiligen Lage.

Die Erstreckung des Grundkörpers, insbesondere dessen Lagen, in Richtung senkrecht zur Hauptachse bezieht sich insbesondere auf deren Erstreckung bei senkrechter Projektion in eine Ebene senkrecht zur Hauptachse.

Die Lagen weisen eine Dicke im Bereich von 1 μm bis 100 μm auf. Die Lagen weisen insbesondere eine Dicke im Bereich von 5 μm bis 50 μm auf. Bei diesen Angaben kann es sich um die mittlere Dicke der Lagen oder um die maximale Dicke der Lagen handeln.

Eine geringere Dicke der Lagen ermöglicht eine besonders flexible und präzise Herstellung des Grundkörpers. Eine größere Dicke der Lagen führt zu einer Reduzierung der zur Herstellung des Grundkörpers benötigten Zeit.

Gemäß einem weiteren Aspekt der Erfindung weisen die Lagen jeweils Flächennormalen auf, welche um höchstens 67°, insbesondere höchstens 45°, insbesondere höchstens 30°, insbesondere höchstens 15° gegen die Richtung der Hauptachse geneigt sind. Die Lagen verlaufen insbesondere quer, abgesehen von einer möglichen Krümmung, vorzugsweise möglichst senkrecht zur Hauptachse. Auch dies ist für die Streueigenschaften des optischen Elements vorteilhaft.

Gemäß einem weiteren Aspekt der Erfindung ist der Brechzahlverlauf entlang der Vorderseite und/oder Rückseite des Grundkörpers homogen. Der Brechzahlverlauf weist insbesondere im Bereich der Vorderseite und/oder der Rückseite keine Extrema auf.

Dies ist unter anderem darauf zurückzuführen, dass die Grenzflächen zwischen aneinander angrenzenden Lagen nicht auf der Vorderseite oder der Rückseite des Grundkörpers enden. Die Grenzflächen zwischen aneinander angrenzenden Lagen sind überschneidungsfrei mit der Vorderseite und der Rückseite des Grundkörpers. Auch hierdurch werden die optischen Eigenschaften des Bauelements verbessert.

Gemäß einem weiteren Aspekt der Erfindung weist der Grundkörper in Richtung parallel zur Hauptachse eine maximale Dicke von höchstens 8 mm, insbesondere höchstens 6 mm, insbesondere höchstens 5 mm und in Richtung senkrecht zur Hauptachse eine Ausdehnung von mindestens 1 cm, insbesondere mindestens 2 cm, insbesondere mindestens 3 cm auf. Dies ist zur Ausbildung eines Brillenglases vorteilhaft.

Aufgrund der gekrümmten Ausbildung der Lagen kann der Brechzahlverlauf jeweils ausschließlich in Richtung senkrecht zu einer Vorderseite und/oder Rückseite der Lagen moduliert sein. Innerhalb einer Lage weist der Brechzahlverlauf in Richtung quer, insbesondere senkrecht zu einer lokalen Normalen auf die Vorderseite und/oder Rückseite der jeweiligen Lage keine Extrema auf. Dies gilt insbesondere bei Betrachtung eines Bereichs, welcher sich ausgehend von der Mitte der jeweiligen Lage bezogen auf eine lokale Normale auf die Vorderseite oder Rückseite der Lage in Richtung senkrecht zu dieser Normalen über eine Erstreckung erstreckt, welche größer ist als die maximale Dicke der Lage. Der Bereich ohne Extrema erstreckt sich in Richtung senkrecht zur Normalen, insbesondere über mindestens 100 μm, insbesondere mindestens 200 μm, insbesondere mindestens 300 μm, insbesondere mindestens 500 μm, insbesondere mindestens 1 mm. Der Extrema-freie Bereich erstreckt sich insbesondere über eine Länge, welche der Wurzel aus dem Produkt des Absolutwerts des lokalen Krümmungsradius mit der Dicke der Lage entspricht.

Der Brechzahlverlauf n = n(x,y,z) im Grundkörper lässt sich durch eine dreidimensionale Fouriertransformierte ñ = (f_x, f_y, f_z) charakterisieren mit einem Modulationsvektor f = (f_x, f_y, f_z) . Hierbei sei im Folgenden von einer normierungsfreien Fouriertransformation ausgegangen:

$$\tilde{n}(f_x, f_y, f_z) = \iiint\limits_{-\infty}^{\infty} n(x, y, z) \exp\{-i2\pi(f_x x + f_y y + f_z z)dxdydz$$

Es wurde gefunden, dass es zu unerwünschten Streueigenschaften kommen kann, wenn der Betrag der dreidimensionalen Fouriertransformierten ñ eine signifikante Amplitude bei Modulationsvektoren f aufweist, für die mindestens eine der beiden folgenden Bedingungen erfüllt ist:

$$\left| \frac{2}{\lambda} \frac{f_z}{|f|^2} - 1 \right| \leq \frac{\Delta\lambda}{\lambda} = u_{max}$$

$$\left| \frac{2}{\lambda} \frac{f_z \cos\vartheta_{max} + \sqrt{f_x^2 + f_y^2} \sin\vartheta_{max}}{|f|^2} - 1 \right| \leq \frac{\Delta\lambda}{\lambda} = u_{max}$$

Hierbei bezeichnet $\lambda$ die Wellenlänge der Beleuchtungsstrahlung, für welche das optische Element ausgelegt ist, beispielsweise $\lambda$ = 500 nm, $\Delta\lambda$ die - Bandbreite der Beleuchtungsstrahlung. $\Delta\lambda$: $\lambda$ lässt sich zum dimensionslosen Parameter $u_{max}$ zusammenfassen mit welchem sich charakterisieren lässt, unter welchen Bedingungen Streulicht, insbesondere für einen Nutzer relevantes Streulicht, im Grundkörper erzeugt wird.

Hierbei bezeichnen x, y und z die Richtungen eines kartesischen Koordinatensystems. Die z-Richtung bezeichnet insbesondere eine Hauptrichtung des optischen Bauelements.

$\vartheta_{max}$ gibt den maximalen Einfallswinkel an, für welchen das optische Bauelement streuoptimiert sein soll. $\vartheta_{max}$ gibt insbesondere den maximalen Einfallswinkel an, für welchen das optische Bauelement in einem vorgegebenen Rahmen im Wesentlichen streuungsfrei ist. $\vartheta_{max}$ wird relativ zur Hauptachse gemessen.

$\vartheta_{max}$ beträgt höchstens 90°, insbesondere höchstens 60°, insbesondere höchstens 45°, insbesondere höchstens 30°, insbesondere höchstens 20°, insbesondere höchstens 15° und insbesondere höchstens 10°.

Ein refraktives optisches Bauelement ist ein optisches Bauelement, welches zu einer Änderung der Ausbreitungsrichtung eines auf das Bauelement einfallenden Lichtstrahls führen kann. Es kann insbesondere zur Bündelung oder Zerstreuung eines parallel einfallenden Strahlenbündels führen.

Allgemein bilden die Bedingungen

$$\left| \frac{2}{\lambda} \frac{f_z}{|f|^2} - 1 \right| \leq \frac{\Delta\lambda}{\lambda} = u_{max}$$

und

$$\left| \frac{2}{\lambda} \frac{f_z \cos\vartheta_{max} + \sqrt{f_x^2 + f_y^2} \sin\vartheta_{max}}{|f|^2} - 1 \right| \leq \frac{\Delta\lambda}{\lambda} = u_{max}$$

Ausschlussbedingungen. Sie definieren "verbotene Bereiche" für den Modulationsvektor der Fouriertransformierten des Brechzahlverlaufs und damit für den Brechzahlverlauf, d.h. der Brechzahlverlauf sollte so bestimmt sein, dass für einen vorgegebenen Wert von $\vartheta_{max}$ keine der beiden Ungleichungen erfüllt ist. $\lambda$ gibt hierbei eine Wellenlänge an, für welche das optische Bauelement verwendet werden soll.

Unter Brechzahlhub sei die Differenz zwischen der maximalen Brechzahl und der minimalen Brechzahl im Grundkörper, insbesondere in einem bestimmten Bereich desselben, insbesondere beim Durchgang durch den Grundkörper, verstanden.

Das refraktive optische Bauelement ist insbesondere zur Verwendung im sichtbaren Bereich, insbesondere im Bereich einer Wellenlänge $\lambda$ von 400 nm bis 800 nm, vorgesehen. Dies ist jedoch nicht einschränkend zu verstehen. Es kann sich auch um refraktive optische Bauelemente zur Verwendung im Infrarotbereich oder zur Verwendung im UV-Bereich handeln. Bei einer vorgesehenen Verwendung des refraktiven optischen Bauelements im nicht-sichtbaren Wellenlängenbereich können die Randbedingungen für den Modulationsvektor f anhand der allgemeinen Formeln an die gewünschte Wellenlänge angepasst werden. Erfindungsgemäß wurde erkannt, dass ein Grundkörper mit einem derart modulierten Brechzahlverlauf, falls die vorhergehend genannten Ausschlussbedingungen (verbotene Bereiche) beachtet werden, zu besonders geringen Streuverlusten führt. Mit einem derart modulierten Brechzahlverlauf lassen sich Streuverluste um mehr als 50 %, insbesondere mehr als 60 % und insbesondere mehr als 70 % reduzieren. Er weist mit anderen Worten besonders vorteilhafte optische Eigenschaften auf.

Bei der Fouriertransformierten kann es sich insbesondere um eine normierungsfreie Fouriertransformierte handeln. Zur praktischen Bestimmung der Fouriertransformierten kann insbesondere eine diskrete Fourier-Transformation (DFT) oder eine schnelle Fourier-Transformation (FFT, fast fourier transform) verwendet werden.

Bei der Fouriertransformierten handelt es sich insbesondere um eine gefensterte Fouriertransformierte. Die Länge des Fensters beträgt insbesondere höchstens 10 mm, insbesondere höchstens 5 mm, insbesondere höchstens 3 mm, insbesondere höchstens 2 mm. Sie beträgt insbesondere mindestens 1 mm. Je kürzer die Länge des Fensters, desto größer ist die Flexibilität für die Herstellung des refraktiven optischen Bauelements mit Bereichen unterschiedlicher optischer Eigenschaften.

Die minimale Länge des Fensters ist insbesondere so groß wie der minimal zu erwartende Durchmesser der Pupille eines Brillenträgers.

Der maximale mittlere Abstand zwischen benachbarten Maxima und/oder zwischen benachbarten Minima des Brechzahlverlaufs beträgt insbesondere höchstens 100 $\mu$m, insbesondere höchstens 10 $\mu$m. Er kann insbesondere durch das Verfahren zur Herstellung des refraktiven optischen Bauelements beeinflusst, insbesondere bestimmt sein.

Bei der Bestimmung der Extrema im Brechzahlverlauf seien dessen nie vollständig zu verhindernde Schwankungen unberücksichtigt. Es können insbesondere Extrema, welche innerhalb eines Bereichs von $\pm$ drei Standardabweichungen vom Mittelwert des Brechzahlverlaufs liegen, unberücksichtigt bleiben. Es ist auch möglich, Extrema, welche um weniger als 1/10 des maximalen Brechzahlhubs im Grundkörper vom Mittelwert der Brechzahl abweichen, unberücksichtigt zu lassen. Es ist insbesondere möglich, bis zu einem maximalen Brechzahlhub von $10^{-6}$, insbesondere $2 \cdot 10^{-6}$, insbesondere $4 \cdot 10^{-6}$, insbesondere $10^{-5}$, insbesondere $4 \cdot 10^{-5}$ von einem homogenen Brechzahlverlauf, das heißt einem Brechzahlverlauf ohne Extrema, zu sprechen. Als Maximum beziehungsweise Minimum im Brechzahlverlauf können insbesondere ausschließlich solche Extrema bezeichnet werden, die einen betragsmäßigen Brechzahlhub von mindestens $10^{-4}$ zum nächstliegend-benachbarten Extremum aufweisen.

Bei dem optischen Bauelement handelt es sich insbesondere um eine Linse, insbesondere für die Herstellung eines Brillenglases. Es kann sich auch um ein aus einer derartigen Linse hergestelltes Brillenglas handeln.

Gemäß einem weiteren Aspekt der Erfindung ist der Grundkörper mittels eines additiven Verfahrens hergestellt. Der Grundkörper ist insbesondere mittels eines dreidimensionalen Druckverfahrens hergestellt. Der Grundkörper kann insbesondere mittels eines sogenannten Multi-Jet Modelling (MJM)-Verfahrens hergestellt werden. Er kann auch mittels eines volumetrischen additiven Verfahrens hergestellt werden.

Bei einem additiven Verfahren wird, im Gegensatz zu einem spanenden Verfahren, Material sukzessive hinzugefügt, insbesondere auf einem Träger oder einen bereits hergestellten Teil des Grundkörpers aufgetragen.

Der Grundkörper kann insbesondere aus einem oder mehreren Kunststoffen, mineralischen Gläsern oder Quarzen hergestellt sein, insbesondere bestehen. Der Grundkörper wird insbesondere aus einem oder mehreren Thermoplasten hergestellt. Der Grundkörper kann insbesondere aus einen oder mehreren Polymeren, insbesondere Photopolymeren, hergestellt sein. Hierbei können insbesondere photoaktivierbare Monomere aufgetragen und ausgehärtet werden. Zur Aushärtung kann beispielsweise eine Bestrahlung mit UV-Licht vorgesehen sein.

Ein 3D-Druckverfahren ermöglicht eine besonders flexible und kostengünstige Herstellung des Grundkörpers.

Gemäß einer Variante kann der Brechzahlverlauf im Grundkörper in allen drei Raumrichtungen moduliert sein. Der Brechzahlverlauf im Grundkörper kann insbesondere in allen drei Raumrichtungen einen Brechzahlhub von mindestens $10^{-4}$, insbesondere mindestens 0,001 aufweisen.

Dies ermöglicht ein besonderes flexibles Design der optischen Eigenschaften, insbesondere der Abbildungseigenschaften, insbesondere der Brechkraft und/oderder Korrektion von Abbildungsfehlern, des Grundkörpers.

Der Brechzahlhub $\Delta n$ in Richtung parallel zur Hauptrichtung beträgt insbesondere höchstens 0,2, insbesondere höchstens 0,1, insbesondere höchstens 0,05, insbesondere höchstens 0,03. Er kann größer sein als $10^{-5}$, insbesondere größer als $10^{-4}$.

Der Brechzahlverlauf $n$ weist innerhalb einer Lage in Richtung quer zur Hauptrichtung insbesondere einen Gradienten von höchstens 10/m, insbesondere höchstens 5/m, insbesondere höchstens 3/m, insbesondere höchstens 2/m, insbesondere höchstens 1/m, insbesondere höchstens 0,5/m, insbesondere höchstens 0,3/m, insbesondere höchstens 0,2/m, insbesondere höchstens 0,1/m auf. Der Grundkörper kann insbesondere innerhalb einer Lage in Richtung quer zur Hauptrichtung eine im Wesentlichen homogene Brechzahl aufweisen.

Der Brechzahlverlauf in Richtung parallel zur Hauptrichtung kann ebenfalls abgesehen von den Grenzflächen zwischen zwei aneinander angrenzenden Lagen einen entsprechenden maximalen Gradienten aufweisen. An den Grenzflächen zwischen zwei Lagen kann der Gradient des Brechzahlverlaufs jedoch mehr als 10/m, insbesondere mehr als 20/m, insbesondere mehr als 30/m, insbesondere mehr als 50/m, insbesondere mehr als 100/m betragen. Diese Angaben beziehen sich insbesondere auf eine Ermittlung des Gradienten des Brechzahlverlaufs auf einer Längenskala von 1 $\mu$m.

Gemäß einem weiteren Aspekt der Erfindung weist der Brechzahlverlauf ausschließlich eine Modulation in einer Raumrichtung, insbesondere parallel zu einer Hauptrichtung des refraktiven optischen Bauelements, auf. Dies kann auf einen lagenweisen Aufbau, insbesondere eine lagenweise Herstellung, des Grundkörpers zurückzuführen sein. Die Lagen können hierbei gekrümmt ausgebildet sein. Bei einer gekrümmten Ausbildung der Lagen weist der Brechzahlverlauf insbesondere ausschließlich eine Modulation in Richtung parallel zu einer Normalen auf die Vorderseite und/oder Rückseite der Lagen auf. Der Brechzahlverlauf weist insbesondere ausschließlich an den Grenzflächen zwischen zwei benachbarten Lagen Inhomogenitäten auf, welche über die normalen, statistischen Schwankungen im Brechzahlverlauf hinausgehen. Innerhalb einer Lage weist der Brechzahlverlauf insbesondere höchstens 10, insbesondere höchstens 5, insbesondere höchstens 3, insbesondere höchstens 2 Maxima auf.

Gemäß einem weiteren Aspekt der Erfindung weist der Grundkörper in Richtung senkrecht zu einer Hauptrichtung eine mindestens fünfmal so große, insbesondere mindestens zehnmal so große Ausdehnung auf wie in Hauptrichtung.

Beim Grundkörper kann es sich insbesondere um ein flächiges Bauelement handeln. Dies ist insbesondere bei der Verwendung des Grundkörpers zur Herstellung eines Brillenglases vorteilhaft. Unter einem flächigen Bauelement sei hierbei insbesondere ein Bauelement verstanden, welches in zwei Raumrichtungen wesentlich größere Ausdehnungen aufweist als in einer dritten, hierzu senkrechten Raumrichtung. Ein flächiges Bauelement weist insbesondere eine Dicke auf, welche deutlich kleiner ist als die dritte Wurzel seines Volumens. Die Dicke des Grundkörpers kann insbesondere kleiner sein als ein Fünftel der dritten Wurzel seines Volumens.

Der Grundkörper ist insbesondere linsenförmig ausgebildet. Die Vorderseite und die Rückseite des Grundkörpers können jeweils konvex, konkav oder plan ausgebildet sein. Mindestens eine der beiden Seiten kann eine Krümmung aufweisen. Die Vorderseite und/oder die Rückseite kann sphärisch, asphärisch oder als Freiformfläche ausgebildet sein.

Die Hauptrichtung entspricht insbesondere der Richtung, entlang welcher die Dicke einer Linse, insbesondere die Dicke des Grundkörpers, gemessen wird. Sie steht insbesondere senkrecht auf der Vorderseite und/oder der Rückseite des optischen Bauelements, insbesondere in einem zentralen Bereich desselben. Die Hauptrichtung kann insbesondere mit einer durch das optische Bauelement definierten optischen Achse (Hauptachse) zusammenfallen.

Als optische Achse (Hauptachse) sei hierbei insbesondere die oder eine Gerade bezeichnet, entlang derer die Brechkraft des optischen Bauelements gemessen wird. Als Dicke des Grundkörpers kann die Erstreckung desselben in Richtung der optischen Achse bezeichnet werden. Als Dicke des Grundkörpers kann auch die maximale Ausdehnung desselben in Richtung parallel zur optischen Achse oder ein Mittelwert dienen.

Die Hauptachse steht insbesondere senkrecht zur Vorderseite und/oder Rückseite des Grundkörpers, insbesondere in einem zentralen Bereich desselben. Die Hauptachse steht insbesondere senkrecht zur Vorderseite und/oder Rückseite des Grundkörpers im Bereich seiner geringsten Dicke oder im Bereich seiner maximalen Dicke. Die Richtung der Hauptachse wird vorliegend auch als z-Richtung bezeichnet.

Gemäß einem weiteren Aspekt der Erfindung fällt die erste Richtung, entlang welcher der Brechzahlverlauf moduliert ist, mit der Hauptrichtung zusammen.

Gemäß einem weiteren Aspekt der Erfindung ist der Brechzahlverlauf entlang der ersten Richtung, insbesondere entlang der Hauptrichtung, quasiperiodisch oder periodisch. Dies erleichtert die Herstellung des Grundkörpers. Dies erlaubt es insbesondere, unterschiedliche Lagen des Grundkörpers mit im Wesentlichen identischen, insbesondere identischen Verfahrensparametern herzustellen.

Unter quasiperiodisch sei hierbei verstanden, dass die Periode um bis zu 10 %, insbesondere bis zu 30 %, insbesondere bis zu 50 % um einen Mittelwert schwanken darf. Bei einem periodischen Verlauf ist die Periode, insbesondere der Abstand zwischen zwei gleichartigen Extrema, insbesondere zwischen zwei Maxima, konstant.

Gemäß einem weiteren Aspekt der Erfindung ist der Grundkörper aus einem oder mehreren Materialien mit einem spannungsoptischen Koeffizienten ungleich Null. Er ist insbesondere aus einem oder mehreren Materialien hergestellt, welche beim Aushärten aus einem flüssigen Zustand eine Volumenänderung, insbesondere Volumenschwund, vollziehen.

Der spannungsoptische Koeffizient ist ein Parameter, welcher zur Beschreibung der Abhängigkeit der Brechzahl eines Materials von einem mechanischen Spannungsfeld verwendet wird. Für eine Bestimmung des spannungsoptischen Koeffizienten sei auf DIN 52314 verwiesen.

Gemäß einem weiteren Aspekt der Erfindung weist der Grundkörper in Richtung senkrecht zur ersten Richtung, insbesondere in Richtung senkrecht zur Hauptrichtung, eine zumindest bereichsweise homogene beziehungsweise konstante Brechzahl auf. Die Bereiche homogener Brechzahlen können sich in Richtung quer zur Hauptrichtung über eine Ausdehnung, welche mindestens so groß ist wie die Dicke, insbesondere die mittlere Dicke oder die maximale Dicke, des Grundkörpers erstrecken. Sie können sich insbesondere von einem Rand des Grundkörpers zu einem gegenüberliegenden, insbesondere diametral gegenüberliegenden Rand, des Grundkörpers erstrecken. Sie können sich insbesondere über die gesamte Ausdehnung des Grundkörpers quer zur Hauptrichtung, insbesondere senkrecht zur Hauptrichtung, erstrecken. Sie können hierbei jedoch gekrümmte Grenzflächen aufweisen. Insbesondere Bereiche homogener Brechzahl, welche sich über die gesamte Ausdehnung des Grundkörpers quer zur Hauptrichtung erstrecken, werden im Folgenden auch als Lagen oder optische Lagen bezeichnet.

Der Grundkörper weist eine Mehrzahl optischer Lagen auf. Dies ermöglicht eine besonders flexible Herstellung.

Die optischen Lagen können insbesondere durch Ihren Herstellungsprozess definiert sein. Unter einer optischen Lage ist in diesem Fall ein Volumenbereich des Grundkörpers verstanden, welcher in einem einzigen, insbesondere zeitlich zusammenhängenden Aufbringschritt aufgebracht und/oder in einem einzigen Aushärtschritt ausgehärtet wird. Aufeinanderfolgende Lagen werden insbesondere sukzessive aufeinander aufgebracht und ausgehärtet. Die optischen Lagen sind topologisch wegzusammenhängend, insbesondere einfach zusammenhängend ausgebildet.

Sie können auch wegzusammenhängend, jedoch nicht einfach zusammenhängend ausgebildet sein. Kombinationen von wegzusammenhängenden und/oder einfach zusammenhängenden Lagen sind ebenso möglich. Unter einer optischen Lage sei insbesondere ein sich in Richtung quer, insbesondere senkrecht zur Hauptrichtung erstreckender, wegzusammenhängender Bereich, insbesondere ein einfach zusammenhängender Bereich des Grundkörpers mit homogener beziehungsweise konstanter Brechzahl verstanden. Zwischen zwei aneinander angrenzenden Lagen ist jeweils eine Grenzfläche ausgebildet, an welcher der Brechzahlverlauf eine Inhomogenität aufweist. Unter Inhomogenität im Brechzahlverlauf sei verstanden, dass die Brechzahl an dieser Stelle einen Wert aufweist, welcher von der Brechzahl in mindestens einem angrenzenden Bereich abweicht, insbesondere um einen Brechzahlhub von mindestens $10^{-4}$, insbesondere mindestens 0,001. Die Brechzahl kann im Bereich der Grenzfläche zwischen zwei aneinander angrenzenden Lagen ein Extremum, insbesondere ein Maximum oder ein Minimum aufweisen. Die Grenzfläche selbst kann eine Isofläche der Brechzahl darstellen. Es kann jedoch auch innerhalb der Grenzfläche selbst zu Brechzahlschwankungen kommen. Die optischen Lagen erstrecken sich jeweils quer, insbesondere senkrecht, zur Hauptrichtung.

Die Lagen sind insbesondere derart orientiert, dass die Grenzflächen an die Form der Vorderseite und/oder Rückseite des Grundkörpers angepasst sind. Die Grenzflächen sind derart ausgerichtet, dass sie weder auf der Vorderseite noch auf der Rückseite des Grundkörpers enden. Die Lagen werden weder durch die Vorderseite noch durch die Rückseite des Grundkörpers abgebrochen. Eine derartige Ausrichtung der Grenzflächen führt zu besonders günstigen Streueigenschaften. Durch eine derartige Ausrichtung der Grenzflächen kann insbesondere eine Ankopplung an die einfallende Welle, insbesondere eine Streuung in Vorwärtsrichtung, verringert, insbesondere vermieden werden.

Die optischen Lagen weisen eine in Richtung senkrecht zur Hauptrichtung variierende Dicke auf. Die optischen Lagen weisen eine parallel zur Hauptrichtung gemessene Dicke auf. welche in Richtung senkrecht zur Hauptrichtung variiert.

Erfindungsgemäß wurde erkannt, dass sich hierdurch unerwünschte Streuverluste verringern lassen.

Gemäß einem Aspekt der Erfindung kann die Dicke der optischen Lagen in Abhängigkeit von der Position senkrecht zur Hauptrichtung durch eine zweidimensionale, stetige, insbesondere stetig differenzierbare Funktion beschrieben werden.

Die optischen Lagen sind gekrümmt ausgebildet. Sie können auch wenigstens eine eben ausgebildete Grenzfläche aufweisen. Sie können allgemein eine beliebige Auswahl aus konvexen, konkaven und ebenen Grenzflächen aufweisen.

Gemäß einem weiteren Aspekt der Erfindung weist der Grundkörper eine Mehrzahl von Lagen auf, welche ein schwachharmonisches oder ein nichtharmonisches Lagengitter bilden. Unter einem Lagengitter sei hierbei ein eindimensionales Brechzahlgitter verstanden. Das Lagengitter weist insbesondere eine harmonische, schwachharmonische oder nichtharmonische Modulation in z-Richtung auf. Eine harmonische Modulation lässt sich durch eine harmonische Funktion (Sinus oder Cosinus) mit einer einzigen Frequenz beschreiben.

Für die Beschreibung einer schwachharmonischen Modulation sind bis zu zehn Frequenzen notwendig. Für die Beschreibung einer nicht-harmonischen Modulation sind mehr als zehn Frequenzen notwendig.

Erfindungsgemäß wurde erkannt, dass die optischen Lagen vorzugsweise derart ausgebildet werden können, dass sie, insbesondere zumindest näherungsweise, ein Bragg-Gitter bilden. Sie können insbesondere ein Bragg-Gitter bilden, das nur eine sehr geringe, insbesondere keine Streuwirkung in Vorwärtsrichtung hat. Die Streuwirkung in Vorwärtsrichtung beträgt insbesondere höchstens 3 %, insbesondere höchstens 2 % und insbesondere höchstens 1 %. Die Streuwirkung in Vorwärtsrichtung umfasst zum einen die sogenannte Kleinwinkelstreuung von bis zu 0,5° um die Richtung eines einfallenden Strahls, zum anderen aber auch den sogenannten Haze, der bis zu 20° von der Richtung des einfallenden Strahls abweicht.

Streuung in Vorwärtsrichtung bedeutet, dass ein Teil des einfallenden Strahls um mehr als 0°, jedoch weniger als 90° abgelenkt wird.

Unter Haze kann hierbei die Lichtmenge in Prozent verstanden werden, die im Mittel um mehr als 2,5° von der Richtung des einfallenden Lichtstrahls abweicht. Gemäß einem weiteren Aspekt der Erfindung sind mindestens zwei, insbesondere sämtliche der optischen Lagen aus demselben Material. Das optische Bauelement kann jedoch zusätzlich weitere Lagen oder Schichten aufweisen. Derartige Lagen oder Schichten können insbesondere nicht-optische Funktionen aufweisen. Sie können beispielsweise zum Schutz des optischen Bauelements dienen.

Gemäß einer Alternative weist das optische Bauelement zwei, drei oder mehr optische Lagen aus unterschiedlichen Materialien auf.

Gemäß einem weiteren Aspekt der Erfindung beträgt die Anzahl der optischen Lagen mindestens zwei, insbesondere mindestens drei, insbesondere mindestens fünf, insbesondere mindestens zehn, insbesondere mindestens zwanzig, insbesondere mindestens dreißig, insbesondere mindestens fünfzig, insbesondere mindestens hundert, insbesondere mindestens zweihundert, insbesondere mindestens dreihundert. Die Anzahl der optischen Lagen ist üblicherweise kleiner als 100.000, insbesondere kleiner als 10.000. Dies ist keine zwingende Randbedingung.

Die Anzahl der optischen Lagen ist über die Erstreckung des optischen Bauelements quer zur Hauptachse konstant. Die Anzahl der optischen Lagen ist somit auch innerhalb eines optisch genutzten Bereichs des optischen Bauelements konstant. Die optischen Lagen enden folglich nicht auf der Vorderseite oder der Rückseite des Grundkörpers des optischen Bauelements. Sie erstrecken sich zwischen der Vorderseite und der Rückseite des Grundkörpers und sind somit abgesehen von den beiden äußersten Lagen beabstandet zu diesen Seiten.

Eine größere Anzahl optischer Lagen ermöglicht eine flexiblere Herstellung des optischen Bauelements. Sie ermöglichen es insbesondere, den Dickenverlauf und damit die Brechkraft des optischen Bauelements im Wesentlichen frei vorzugeben.

Die optischen Lagen weisen jeweils eine maximale Dicke $di_{max}$ von 100 $\mu$m, insbesondere höchstens 50 $\mu$m, insbesondere höchstens 30 $\mu$m, insbesondere höchstens 20 $\mu$m, insbesondere höchstens 10 $\mu$m auf. Die maximale Dicke kann hierbei jeweils in Richtung parallel zur Hauptrichtung gemessen werden.

Gemäß einem weiteren Aspekt der Erfindung weisen die optischen Lagen jeweils eine minimale Dicke $di_{min}$ von mindestens 1 $\mu$m, insbesondere mindestens 2 $\mu$m, insbesondere mindestens 3 $\mu$m, insbesondere mindestens 5 $\mu$m, insbesondere mindestens 10 $\mu$m auf.

Die minimale Dicke kann hierbei jeweils in Richtung parallel zur Hauptrichtung gemessen werden.

Es wurde erkannt, dass eine geringe Dicke der optischen Lagen zu besonders vorteilhaften optischen Eigenschaften des optischen Bauelements führt. Durch eine Reduzierung der Dicke der optischen Lagen kann insbesondere der streulichtfreie Einfallswinkelbereich vergrößert werden. Der streulichtfreie Einfallswinkelbereich kann insbesondere mindestens 10°, insbesondere mindestens 15° betragen.

Gemäß einem weiteren Aspekt der Erfindung kann das Verhältnis der maximalen Dicke $di_{max}$ zur minimalen Dicke dimin einer Lage, insbesondere sämtlicher Lagen, jeweils mindestens 1,05, insbesondere mindestens 1,1, insbesondere mindestens 1,2, insbesondere mindestens 1,3, insbesondere mindestens 1,5 betragen.

Gemäß einem weiteren Aspekt der Erfindung weisen mindestens zwei der optischen Lagen unterschiedliche maximale Dicken $d1_{max}$, $d2_{max}$ auf. Der relative Dickenunterschied kann bis zu 10 %, insbesondere bis zu 20 %, insbesondere bis zu 30 %, insbesondere bis zu 50 %, insbesondere bis zu 100 % betragen. Diese Angaben sind nicht einschränkend zu verstehen. Alternativ hierzu ist es möglich, sämtliche optischen Lagen mit derselben maximalen Dicke $di_{max}$ auszubilden.

Werden Lagen unterschiedlicher Dicken zugelassen, eröffnet dies einen zusätzlichen Freiheitsgrad für die Herstellung des optischen Bauelements. Die Randbedingung, wonach sämtliche optische Lagen dieselbe maximale Dicke $di_{max}$ aufweisen, kann zu einer Vereinfachung der Verfahrenssteuerung des Herstellungsprozesses führen.

Gemäß einem weiteren Aspekt der Erfindung weist mindestens eine der Grenzflächen zwischen zwei aneinander angrenzenden optischen Lagen einen Abstand dv zur Vorderseite und einen Abstand $d_R$ zur Rückseite des optischen Bauelements insbesondere dessen Grundkörpers auf, wobei ein Verhältnis dieser Abstände dv : $d_R$ in Richtung senkrecht zur Hauptrichtung um maximal 30 %, insbesondere maximal 20 %, insbesondere maximal 10 %, insbesondere maximal 5 %, insbesondere maximal 3 %, insbesondere maximal 2 %, insbesondere maximal 1 % variiert. Das Verhältnis ist vorzugsweise konstant.

Vorderseite und Rückseite des Grundkörpers sind hierbei die einfach zusammenhängenden, insbesondere stetig differenzierbaren Oberflächen desselben mit einer Erstreckung quer zur Hauptrichtung.

Vorzugsweise sind sämtliche der Grenzflächen entsprechend ausgerichtet.

Der Abstand der Grenzflächen zur Vorderseite und zur Rückseite des optischen Bauelements wird hierbei insbesondere in Richtung parallel zur Hauptrichtung gemessen.

Es hat sich gezeigt, dass eine derartige Ausbildung der optischen Lagen zu besonders vorteilhaften optischen Eigenschaften führt. Hierdurch kann insbesondere vermieden werden, dass es im Bereich der Vorderseite und/oder der Rückseite des optischen Bauelements zu Brechzahlinhomogenitäten kommt. Hierdurch lassen sich insbesondere die Erzeugung von Streulicht verringern, insbesondere vermeiden.

Gemäß einem weiteren Aspekt der Erfindung weisen die optischen Lagen in ihrem Inneren jeweils eine konstante Brechzahl auf. Sie weisen in ihrem Inneren insbesondere homogene, d. h. konstante, optische Eigenschaften auf. Inhomogenitäten, d. h. Variationen, ergeben sich insbesondere ausschließlich im Bereich der Grenzflächen zwischen zwei aneinander angrenzenden Lagen.

Gemäß einem weiteren Aspekt der Erfindung weisen benachbarte Grenzflächen zwischen aneinander angrenzenden Lagen Abstände auf, die in Hauptrichtung um maximal 30 %, insbesondere maximal 20 %, insbesondere maximal 10 %, insbesondere maximal 5 %, insbesondere maximal 3 %, insbesondere maximal 2 %, insbesondere maximal 1 % variieren. Die Abstände zwischen aneinander angrenzenden Lagen sind vorzugsweise konstant. Sie bilden insbesondere eine quasi-periodische, oder eine periodische Abfolge.

Hierdurch wird die Erzeugung von Streulicht verringert, insbesondere vermieden.

Hierbei werden die Abstände, insbesondere ausgehend von einem Startpunkt auf der Vorder- oder Rückseite des optischen Bauelements, in Richtung parallel zur Hauptrichtung gemessen.

Die Periodizität der Lagen verläuft insbesondere parallel zur Hauptrichtung.

Gemäß einem weiteren Aspekt der Erfindung weist das optische Bauelement mindestens eine zusätzliche Schicht auf, welche aus einem anderen Material ist als die optischen Lagen. Die zusätzliche Schicht erstreckt sich insbesondere über die gesamte Ausdehnung des optischen Bauelements in Richtung senkrecht zur Hauptrichtung. Bei der zusätzlichen Schicht kann es sich insbesondere um einen Träger handeln. Als zusätzliche Schicht kann insbesondere eine Hartschicht, insbesondere eine transparente Hartschicht, dienen. Eine transparente Hartschicht umfasst dabei eine dünne Lackschicht, die wiederum auf einen Träger, z.B. eine Linse aus Kunststoff, aufgebracht wird und ebendiese Linse damit gegen äußere Einflüsse wie z.B. Verkratzen unempfindlicher macht. Als zusätzliche Schicht kann auch eine Beschichtung, beispielsweise eine Antireflex-Beschichtung, dienen. Des Weiteren kann als zusätzliche Schicht eine Schicht dienen, die die Reinigbarkeit der Gläser verbessert, z.B. aus einem hydrophoben Material.

Eine weitere Aufgabe der Erfindung besteht darin, ein Brillenglas zu verbessern. Diese Aufgabe wird durch ein Brillenglas mit einem optischen Bauelement gemäß der vorhergehenden Beschreibung gelöst. Die Vorteile ergeben sich aus denen des optischen Bauelements.

Das Brillenglas weist insbesondere besonders günstige Streueigenschaften auf. Bis zum maximalen Einfalls-winkel $\vartheta_{max}$ ist es insbesondere frei von streulichtgenerierenden Bereichen.

Ein entsprechendes Brillenglas ist insbesondere sehr flexibel herstellbar. Das optische Design des Brillenglases ist insbesondere sehr frei vorgebbar. Insbesondere die Brechkraft/oder Korrekturwirkungen des Brillenglases, beispielsweise zur Korrektur eines Astigmatismus, lassen sich im Wesentlichen frei vorgeben. Es ist insbesondere auch möglich, das Brillenglas als Mehrstärkenglas, insbesondere als Bifokalglas, Trifokalglas, insbesondere als Gleitsichtglas, auszubilden. Das Brillenglas kann insbesondere als Freiformglas ausgebildet sein. Es kann individuell an ein Auge eines Benutzers angepasst werden. Das optische Design kann mit Hilfe eines computerunterstützten Verfahrens berechnet werden. Gemäß einem Aspekt der Erfindung handelt es sich um ein Gleitsichtglas.

Gemäß einem weiteren Aspekt der Erfindung weist das Brillenglas eine zusätzliche Beschichtung auf. Bei der Beschichtung kann es sich insbesondere um eine funktionale Beschichtung, beispielsweise um eine Antireflex-Beschichtung und/oder eine Tönung und/oder eine Beschichtung zum Ausfiltern eines bestimmten Wellenlängenbereichs handeln.

Eine weitere Aufgabe der Erfindung besteht darin, ein Verfahren zur Herstellung eines optischen Bauelements zu verbessern.

Diese Aufgabe wird durch ein Verfahren gemäß Anspruch 13 gelöst, bei welchem Baudaten des herzustellenden Grundkörpers bereitgestellt werden und der Grundkörper durch sukzessives Aufbringen von Material auf einen Träger gemäß der bereitgestellten Baudaten hergestellt wird.

Die Baudaten des herzustellenden Grundkörpers können insbesondere individuell, insbesondere durch Vermessung der Augen eines Benutzers, ermittelt werden. Zur Ermittlung der Baudaten des Grundkörpers kann insbesondere ein computerunterstütztes Verfahren, insbesondere eine sogenannte Lens Design-Software (LDS; Linsen-Design-Software), dienen.

Der Brechzahlverlauf im Grundkörper, insbesondere dessen dreidimensionale Fouriertransformierte, weist dabei gerade die vorgehend beschriebenen Eigenschaften auf. Es werden insbesondere die Ausschlussbedingungen eingehalten. Die Vorteile ergeben sich aus dem bereits beschriebenen.

Das Verfahren umfasst ein 3D-Druckverfahren. Gemäß einem Aspekt der Erfindung wird das Material tröpfchenweise aufgebracht. Hierbei kann insbesondere die Größe, das heißt das Volumen der einzelnen Tröpfchen und/oder deren Aufbringdichte und/oder deren Material in Abhängigkeit von den Baudaten variiert werden. Die genannten Parameter, insbesondere die Tröpfchengröße und/oder deren Aufbringdichte kann insbesondere innerhalb einer einzigen Lage variiert werden.

Dies ermöglicht eine besonders flexible, gezielte Ausbildung des Grundkörpers, insbesondere der optischen Lagen, insbesondere deren Dickenverlauf.

Gemäß einem weiteren Aspekt der Erfindung dient als Träger ein optisches Bauelement, insbesondere ein transparentes Bauelement.

Als Träger kann insbesondere auch eine Hartschicht oder Antireflexschicht oder eine hydrophobe Schicht oder eine Linse dienen.

Als Träger kann insbesondere eine Linse dienen, welche aus einem Satz von Standardlinsen mit bestimmter Brechzahl ausgewählt wird. Der Träger kann insbesondere aus einem Satz von Standardlinsen mit einer Brechkraft im Bereich von -10 Dioptrien bis 10 Dioptrien abgestuft in Schritten von 0,5 Dioptrien ausgewählt werden. In diesem Fall umfasst der Standardsatz 41 unterschiedliche Träger. Eine geringere Anzahl ist möglich. Das auf den Träger aufgebrachte Material kann dann zum Feintuning der optischen Eigenschaften, insbesondere zum Ausgleich optischer Fehler höherer Ordnung der Augenlinse dienen.

Gemäß einem weiteren Aspekt der Erfindung wird das Material lagenweise auf den Träger aufgebracht. Das Material wird insbesondere in wegzusammenhängenden, jedoch nicht einfach zusammenhängenden oder in einfach zusammenhängenden Volumenbereichen auf den Träger aufgebracht. Es kann auch gleichzeitig in mehreren unzusammenhängenden Volumenbereichen auf den Träger aufgebracht werden.

Dies ermöglicht einerseits eine besonders einfache Aufbringung des Materials. Andererseits können hierdurch die optischen Eigenschaften des Grundkörpers besonders gut kontrolliert werden.

Gemäß einem Aspekt der Erfindung werden die Lagen jeweils vor dem Auftrag der nächsten Lage zumindest teilweise, insbesondere vollständig, ausgehärtet. Sie können insbesondere mittels elektromagnetischer Strahlung, insbesondere mittels UV-Licht, ausgehärtet werden. Sie können auch durch Erwärmung ausgehärtet werden. Dies ermöglicht ein besonders gleichmäßiges, homogenes Aushärten der Lagen.

Gemäß einem weiteren Aspekt der Erfindung werden innerhalb einer optischen Lage die Größe der Tröpfchen und/oder deren Dichte variiert. Die Änderung der Tröpfchengröße folgt vorzugsweise aus der gewünschten Schichtdickenänderung. Eine Änderung der Schichtdicke um 1 % kann beispielsweise durch eine Änderung des Tröpfchenvolumens um $1,01^3 = 1,03030$, das heißt eine Änderung des Tröpfchenvolumens um etwa 3 % erreicht werden.

Hierdurch kann auf einfache Weise der Dickenverlauf der Lagen beeinflusst werden.

Das Material zur Herstellung der optischen Lagen weist beim Auftragen derselben insbesondere eine Viskosität von weniger als 10 mPas, insbesondere weniger als 5 mPas, insbesondere weniger als 3 mPas, insbesondere weniger als 2 mPas, insbesondere weniger als 1 mPas auf. Diese Angaben beziehen sich auf Raumtemperatur, insbesondere 20°C.

Mittels des beschriebenen Verfahrens lässt sich auf besonders einfache Weise sehr flexibel ein optisch hochwertiges Brillenglas herstellen.

Ein weiterer Aspekt der Erfindung betrifft ein entsprechend hergestelltes Brillenglas.

Ein weiterer nicht beanspruchter Aspekt der Erfindung betrifft ein Computerprogrammprodukt zur Durchführung des vorhergehend beschriebenen Verfahrens gemäß Anspruch 13. Das Computerprogrammprodukt ermöglicht es, mittels bereitgestellter Baudaten eines Grundkörpers, ein Gerät zur additiven Herstellung desselben derart zu steuern, dass der Grundkörper einen vorgegebenen Brechzahlverlauf mit einer vorgegebenen Fouriertransformierten sowie insbesondere Lagen mit einer vorgegebenen Dickenvariation aufweist.

Mittels des Computerprogrammprodukts kann ein Gerät zur additiven Herstellung des Grundkörpers insbesondere derart gesteuert werden, dass der Grundkörper gerade die vorhergehend beschriebenen Eigenschaften aufweist.

Mittels des Computerprogrammprodukts lässt sich insbesondere die Anzahl und/oder Größe und/oder Aufbringdichte und/oder der zeitliche Verlauf des Aufbringens und/oder des Aushärtens der aufzubringenden Volumenbereiche, insbesondere der aufzubringenden Materialtröpfchen steuern.

Ein weiterer nicht beanspruchter Aspekt der Erfindung betrifft einen Datenträger mit Baudaten eines Brillenglases gemäß der vorhergehenden Beschreibung.

Mit Hilfe der auf dem Datenträger abgespeicherten Baudaten lassen sich insbesondere ein Gerät und/oder ein Verfahren zur Herstellung eines entsprechenden Brillenglases steuern.

Die Baudaten können insbesondere auf einer CD-ROM oder einem USB-Speichergerät abgespeichert sein.

Eine weitere Aufgabe der Erfindung besteht darin, ein Brillenglas zu verbessern.

Zur Lösung dieser Aufgabe umfasst ein Brillenglas einen refraktives optisches Bauelement gemäß Anspruch 1.

Weitere Details des Brillenglases sowie Vorteile desselben ergeben sich aus der vorhergehenden Beschreibung.

Eine weitere Aufgabe der Erfindung besteht darin, ein entsprechendes Verfahren zum Herstellen eines Brillenglases bereitzustellen.

Das erfindungsgemäße Verfahren zum Herstellen eines Brillenglases umfasst das Verfahren gemäß Anspruch 13.

Zur technischen Umsetzung mit Hilfe eines 3D-Druckprozesses kann z.B. die Größe der flüssigen Kunststoff-Tröpfchen im lagenweisen Druckprozess in lateraler Richtung geeignet individuell variiert werden. Dadurch kann die Dicke einer einzelnen Lage während des Auftrags beliebig verändert werden. Alternativ kann die Schreibdichte oder die relative Position der Tröpfchen zueinander geeignet verändert werden.

Diese Alternativen sind nur Beispiele. Es sind auch andere technische Umsetzungen möglich, deren gemeinsame Eigenschaft darin besteht, den Schreibprozess beim Auftrag einer einzelnen Lage so zu adaptieren, dass eine Lage mit variabler Dicke in den Raumrichtungen entsteht.

Weitere Details und Vorteile der Erfindung ergeben sich aus der Beschreibung von Ausführungsbeispielen anhand der Figuren. Es zeigen:

Fig. 1 schematisch einen Querschnitt durch ein optisches Bauelement mit mehreren Lagen,

Fig. 2 eine Darstellung gemäß Fig. 1 eines optischen Bauelements mit einer anderen geometrischen Ausbildung,

Fig. 3 eine Darstellung gemäß Fig. 1 eines optischen Bauelements mit einer anderen geometrischen Ausbildung und

Fig. 4      schematisch einen Ablauf eines iterativen Verfahrens zur Herstellung eines optischen Bauelements mittels eines 3D-Druckverfahrens.

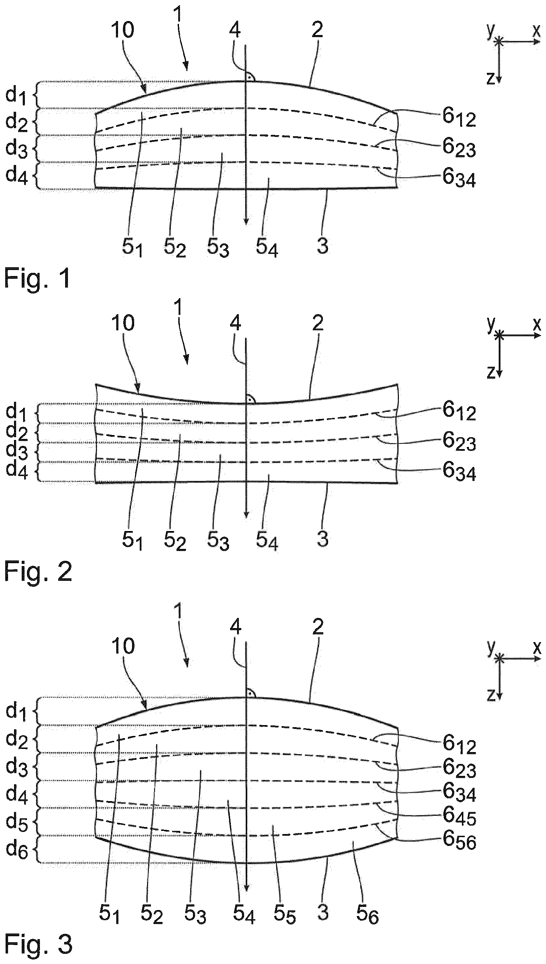

Im Folgenden werden unter Bezugnahme auf die Figuren 1 bis 3 unterschiedliche Varianten eines optischen Bauelements 1 beschrieben.

Bei dem optischen Bauelement 1 handelt es sich insbesondere um eine Linse, insbesondere zur Herstellung eines Brillenglases. Es handelt sich insbesondere um ein transparentes optisches Bauelement.

In der Figur 1 ist exemplarisch und schematisch eine Plankonvexlinse, in der Figur 2 eine Plankonkavlinse und in der Figur 3 eine Bi-Konvexlinse dargestellt. Die Erfindung ist nicht auf die in den Figuren dargestellten Formen beschränkt. Andere Formen sind ebenso möglich. Bei der Linse kann es sich um eine sphärische, eine asphärische oder eine Freiformlinse handeln.

Allgemein weist das optische Bauelement 1, einen Grundkörper 10 mit einer Vorderseite 2 und einer Rückseite 3 auf. Die Vorderseite 2 und die Rückseite 3 erstrecken sich quer zu einer Hauptrichtung 4. Die Hauptrichtung 4 entspricht insbesondere der Strahlrichtung senkrecht auf das optische Bauelement 1 einfallenden Lichtes. Sie entspricht insbesondere der optischen Achse des optischen Bauelements 1.

Das optische Bauelement 1 umfasst eine Mehrzahl von optischen Lagen $5_i$. Die in den Figuren dargestellte Anzahl m der optischen Lagen $5_i$ ist exemplarisch zu verstehen. Die Anzahl m der optischen Lagen $5_i$ beträgt mindestens zwei. Sie kann auch wesentlich größer sein. Sie kann insbesondere mehr als 100 betragen. Beispielsweise kann ein 2 mm dickes Brillenglas etwa 200 optische Lagen aufweisen.

Die Anzahl m der optischen Lagen $5_i$ ist über die Erstreckung des optischen Bauelements (1) quer zur Hauptachse konstant. Dies ist darauf zurückzuführen, dass keine Lage auf der Vorderseite 2 oder der Rückseite 3 des Grundkörpers 10 endet, das heißt von diesen Seiten geschnitten wird. Die Lagen $5_i$ verlaufen mit anderen Worten zwischen der Vorderseite 2 und der Rückseite 3.

Der optisch genutzte Bereich weist insbesondere eine Fläche von mindestens 1 cm$^2$, insbesondere mindestens 2 cm$^2$, insbesondere mindestens 3 cm$^2$, insbesondere mindestens 5 cm$^2$, insbesondere mindestens 10 cm$^2$ auf. Diese Angaben sind nicht einschränkend zu verstehen. Größere oder kleinere optische Bauelemente sind prinzipiell ebenso möglich.

Die optischen Lagen $5_i$ erstrecken sich jeweils quer zur Hauptrichtung 4. Sie können gekrümmt ausgebildet sein.

Sie weisen eine in Richtung senkrecht zur Hauptrichtung 4 variierende Dicke di auf. Beispielsweise ist die Dicke di der optischen Lagen $5_i$ beim optischen Bauelement 1 gemäß Figur 1 im Mittenbereich größer als im Randbereich. Beim optischen Bauelement 1 gemäß Figur 2 ist die Dicke di der optischen Lagen $5_i$ im Mittenbereich geringer als im Randbereich. Das Verhältnis der größten Dicke $di_{max}$ einer optischen Lage $5_i$ zu ihrer geringsten Dicke dimin kann insbesondere mindestens 1,05, insbesondere mindestens 1,1, insbesondere mindestens 1,2, insbesondere mindestens 1,3, insbesondere mindestens 1,5 betragen.

Der Verlauf der optischen Lagen $5_i$, das heißt der Verlauf der Schichtstruktur des optischen Bauelements 1, ist insbesondere an die Form der Vorderseite 2 und/oder der Rückseite 3 angepasst ausgebildet.

Zwischen jeweils zwei aneinander angrenzenden Lagen $5_i$, $5_j$ ist jeweils eine Grenzfläche $6_{ij}$ ausgebildet. Die Grenzflächen $6_j$ sind in den Figuren durch gestrichelte Linien dargestellt.

An den Grenzflächen $6_{ij}$ weist ein Brechzahlverlauf jeweils eine Inhomogenität, insbesondere in Form eines Maximums oder eines Minimums, auf.

Im Übrigen sind die optischen Lagen $5_i$ vorzugsweise homogen ausgebildet. Sie weisen insbesondere in ihrem Inneren homogene optische Eigenschaften auf. Sie weisen insbesondere quer zur Hauptrichtung 4 eine einheitliche, das heißt eine homogene beziehungsweise konstante Brechzahl auf.

Die Grenzflächen $6_{ij}$ sind insbesondere derart ausgebildet, dass sie einen möglichst gleichmäßigen Übergang von der Form der Vorderseite 2 zur Form der Rückseite 3 bilden.

Die optischen Lagen $5_i$ sind insbesondere derart ausgebildet, dass sie entlang einer parallel zur Hauptrichtung 4 verlaufenden Geraden den Abstand zwischen der Vorderseite 2 und der Rückseite 3 des optischen Bauelements 1 äquidistant aufteilen. Vorzugsweise gilt dies für jede beliebige, parallel zur Hauptrichtung 4 durch das optische Bauelement 1 verlaufende Gerade.

Der Verlauf der Grenzflächen $6_{ij}$ ist insbesondere an den Verlauf der Vorderseite 2 und/oder der Rückseite 3 angepasst. Er ist insbesondere sukzessive an die Geometrie der Vorderseite 2 und die Geometrie der Rückseite 3 angepasst.

Beim Durchgang durch das optische Bauelement 1 in Richtung parallel zur Hauptrichtung 4 ist somit eine zumindest näherungsweise periodische, insbesondere eine periodische Abfolge, der Brechzahlinhomogenität feststellbar. Die maximale Periode dieser Abfolge ist vorzugsweise kleiner als 1 mm, insbesondere kleiner als 500 $\mu$m, insbesondere kleiner als 300 $\mu$m, insbesondere kleiner als 200 $\mu$m, insbesondere kleiner als 100 $\mu$m, insbesondere kleiner als 50 $\mu$m, insbesondere kleiner als 30 $\mu$m, insbesondere kleiner als 20 $\mu$m, insbesondere kleiner als 10 $\mu$m.

Diese Werte gelten entsprechend für eine maximale Dicke $di_{max}$ der optischen Lagen $5_i$.

Im Folgenden werden Details des Verfahrens zur Herstellung des optischen Bauelements 1 beschrieben.

Das optische Bauelement 1 wird in einem 3D-Druckverfahren, hergestellt. Hierbei wird Material insbesondere auf einen Träger aufgetragen. Das Material wird sukzessive gemäß bereitgestellter Baudaten des Grundkörpers aufgebracht.

Das Material wird insbesondere lagenweise aufgebracht. Die optischen Lagen $5i$ werden insbesondere sukzessive aufgebracht, das heißt eine optische Lage $5_j$ mit $j > i$ wird erst nach dem Aufbringen der optischen Lage $5i$ aufgebracht.

Es ist auch möglich, mit dem Aufbringen einer Lage $5i+i$ zu beginnen, bevor die vorhergehende Lage $5i$ vollständig aufgebracht ist.

Die optischen Lagen $5i$ werden insbesondere in flüssigem Zustand aufgetragen. Es ist vorgesehen, die optischen Lagen $5i$ tröpfchenweise aufzutragen.

Nach dem Auftragen der optischen Lagen $5i$ werden die optischen Lagen $5i$ teilweise oder ganz ausgehärtet.

Zur Aushärtung der optischen Lagen $5i$ kann eine Bestrahlung mittels UV-Lichtes und/oder eine Wärmebehandlung vorgesehen sein.

Laterale Materialinhomogenitäten innerhalb ein und derselben optischen Lage $5i$ können beispielsweise durch eine Vermischung der flüssigen Tröpfchen nach dem Auftragen, jedoch vor deren Aushärtung, minimiert werden.

Als Material für die optischen Lagen $5i$ dient insbesondere ein Kunststoff oder ein mineralisches Glas mit einem spannungsoptischen Koeffizienten $\neq 0$. Da es beim Aushärten der optischen Lagen $5i$ zu einer Volumenänderung, insbesondere zu einem isotropen Schrumpfen des Materials, kommen kann, führt dies im Bereich der Grenzflächen $6_{ij}$ zu mechanischen Spannungen, die zu den bereits erwähnten Brechzahlinhomogenitäten führen.

Wie bereits erwähnt, wird die Dicke $di$ der optischen Lagen $5i$ über deren Erstreckung quer zur Hauptrichtung 4 zu variiert. Hierfür kann die Größe, insbesondere das Volumen der aufgetragenen Tröpfchen, beim Auftragen in lateraler Richtung variiert werden. Es ist auch möglich, die Dichte der aufgetragenen Tröpfchen, insbesondere deren relative Position zueinander, über die Erstreckung des optischen Bauelements 1 in Querrichtung zu variieren. Hierdurch lassen sich die optischen Lagen $5i$ mit einer variablen Dicke $di$ sehr flexibel herstellen.

Die Variation der Tröpfchengröße und/oder der Dichte der aufgetragenen Tröpfchen kann auf einfache Weise durch Ansteuerung des Druckkopfes präzise gesteuert werden.

Der Durchmesser der Tröpfchen beim Auftragen ist insbesondere höchstens so groß wie die maximale Dicke $di_{max}$ der jeweils herzustellenden Lage $5i$.

Der Durchmesser und/oder die Aufbringdichte der Tröpfchen kann innerhalb einer einzigen Lage variieren.

Bei dem verfahrensgemäß hergestellten optischen Bauelement 1 handelt es sich insbesondere um eine optische Komponente zur Herstellung eines Brillenglases, insbesondere eines Gleitsichtglases.

Die optische Komponente kann weiteren Bearbeitungsschritten unterzogen werden. Es ist auch möglich, das Brillenglas direkt mit Hilfe des vorhergehend beschriebenen Verfahrens herzustellen.

Auf das optische Bauelement 1 kann außerdem eine Beschichtung aufgebracht werden. Das Brillenglas kann insbesondere eine zusätzliche, funktionale Beschichtung, insbesondere eine Antireflex-Beschichtung, aufweisen.

Zur Herstellung des Grundkörpers 10 wird ein Gerät zur additiven Herstellung des Grundkörpers 10 bereitgestellt. Bei dem Gerät handelt es sich um einen 3D-Drucker, insbesondere einen 3D-Drucker nach dem Multi-Jet Modelling Prinzip oder dem Fused Deposition Modelling (FDM; Schmelzschichtung) Prinzip.

Das Gerät ist mittels bereitgestellter Baudaten des Grundkörpers 10 steuerbar. Es ist insbesondere derart steuerbar, dass der Grundkörper einen vorgegebenen Brechzahlverlauf mit einer vorgegebenen Fouriertransformierten aufweist.

Das Gerät ist insbesondere mittels eines Computerprogrammprodukts steuerbar. Das Computerprogrammprodukt kann das Gerät zur additiven Herstellung des Grundkörpers 10 mithilfe der bereitgestellten Baudaten des Grundkörpers 10 steuern.

Als Baudaten können die konkreten optischen und/oder geometrischen Daten des herzustellenden Grundkörpers 10 dienen. Als Baudaten können insbesondere eine konkrete Brechzahlverteilung und deren Fouriertransformierte vorgegeben werden.

Alternativ oder zusätzlich ist es auch möglich, die Baudaten aus den Rezeptdaten für ein herzustellendes Brillenglas zu ermitteln. Diese Ermittlung kann vom Computerprogrammprodukt des Geräts zur additiven Herstellung des Grundkörpers 10 durchgeführt werden. Sie kann auch mittels eines weiteren, separaten Computerprogrammprodukts, insbesondere einer CD-ROM oder einer DVD mit sogenannter Lens Design-Software (LDS; Linsendesign-Software), durchgeführt werden. Es ist insbesondere möglich, aus den Rezeptdaten für ein Brillenglas die Baudaten des Grundkörpers 10, insbesondere den Brechzahlverlauf des Grundkörpers 10, sowie Steuerparameter zur Steuerung des Materialauftrags mit Hilfe des Geräts zur additiven Herstellung des Grundkörpers 10 zu berechnen.

Es ist auch möglich, dass zur Herstellung des Grundkörpers 10, insbesondere des daraus herzustellenden Brillenglases, Messdaten zur Charakterisierung der Fehlsichtigkeit eines Nutzers ermittelt und an eine separate Recheneinheit übermittelt werden. Mittels der separaten Recheneinheit können aus den gemessenen Werten zur Charakterisierung der Fehlsichtigkeit Baudaten des Grundkörpers 10 zur Kompensation der Fehlsichtigkeit ermittelt werden. Diese können dann als Computerprogrammprodukt zur Steuerung eines Geräts zur additiven Herstellung des Grundkörpers 10 zur Verfügung gestellt werden.

Mittels des Geräts zur additiven Herstellung des Grundkörpers 10 ist auf besonders einfache Weise, sehr flexibel der Grundkörper 10 und das daraus hergestellte Brillenglas herstellbar.

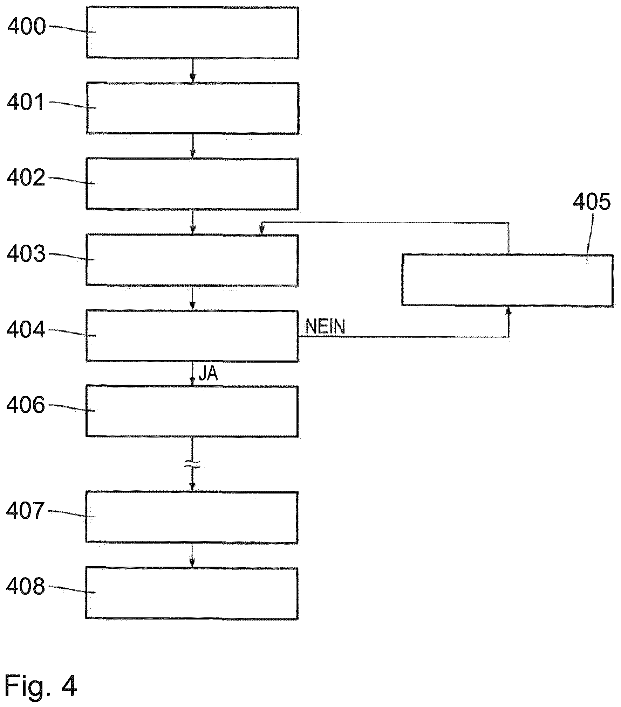

Nachfolgend wird anhand der Figur 4 ein iteratives Verfahren beschrieben, wie ein refraktives optisches Element mittels eines additiven Herstellverfahrens computergesteuert hergestellt werden kann.

Eingangsparameter in einem Bereitstellungsschritt 400 mit Eingangsparameter bereitgestellt sind die gewünschte refraktive Brechkraft des herzustellenden refraktiven optischen Elements, der Brechungsindex des Materials, aus dem das optische Element hergestellt werden soll, sowie Vorgaben bezüglich der Form oder Krümmung einer Grenzfläche des herzustellenden optischen Elements. Das Material ist typischer Weise ein Monomer, das nach dem Aufbringen jeder Lage polymerisiert wird, wobei das Polymer im Anwendungs-Wellenlängenbereich des optischen Elements transparent ist. In diesem Fall ist der berücksichtigte Brechungsindex des Materials der Brechungsindex im polymerisierten Zustand. Ein weiterer Eingangsparameter ist empirische Information über die beim Polymerisieren des Materials an den Grenzflächen auftretende Brechzahl-Inhomogenität. Ein weiterer Eingangsparameter kann typischer Weise eine Solldicke der herzustellenden Lagen sein. Ein weiterer Eingangsparameter ist der vorgegebene maximale Einfallswinkel $\vartheta_{max}$. Ein weiterer Eingangsparameter ist das Spektrum der Wellenlängen im Nutzbereich.

In Fällen in denen das herzustellende refraktive optische Element ein Brillenglas, insbesondere ein Gleitsichtbrillenglas ist, können weitere Eingangsparameter vorgesehen sein, beispielsweise Vorgaben über die Addition in einem Nahsichtteil des Brillenglases, über Breite und Verlauf des sogenannten Progressionskanals, sowie benutzerspezifische Vorgaben wie die Brillenglas-Vorneigung und/oder Hornhautscheitelabstand nach Einbau des Brillenglases in die Brillenfassung.

In einem ersten Simulations-Schritt 401 wird basierend auf den Eingangsparametern unter der Annahme eines homogenen Brechzahlverlaufs in dem herzustellenden optischen Element ein erstes Modell des optischen Elements hinsichtlich seiner Dicke und der Form der zweiten Fläche so berechnet, dass dieses die weiteren vorgegebenen Eingangsparameter erfüllt.

In einem zweiten Simulations-Schritt 402 wird basierend auf dem im ersten Simulationsschritt berechneten ersten Modellein ein abgewandeltes zweites Modell des optischen Elements berechnet, das lagenweise aus einer Anzahl an Lagen mit einer vorgegebenen Soll-Lagendicke aufweist. Dabei werden unter Berücksichtigung der an den Grenzflächen der einzelnen Lagen zu erwartenden Brechzahl-Inhomogenitäten im zweiten Modell die Dicke des optischen Elements und die Form der zweiten Fläche angepasst, so dass die weiteren vorgegebenen Eingangsparameter weiterhin erfüllt werden.

In einem dritten Schritt 403 wird basierend auf dem zweiten Modell unter Berücksichtigung der an den Grenzflächen der einzelnen Lagen zu erwartenden Brechzahl-Inhomogenitäten und der Lagendicke im zweiten Modell der dreidimensionale Brechzahlverlauf n(x,y,z) und die dreidimensionale Fouriertransformierte des dreidimensionalen Brechzahlverlaufs n(x,y,z) entsprechend der Gleichung

$$\tilde{n}(f_x, f_y, f_z) = \iiint_{-\infty}^{\infty} n(x, y, z)\exp\{-i2\pi(f_x x + f_y y + f_z z)dxdydz$$

berechnet. Zur Berechnung der Fouriertransformierten kann die diskrete Fourier-transformation (DFT) oder eine schnelle Fouriertransformation (FFT) verwendet werden.

In einem vierten Schritt 404 wird überprüft, ob der Modulationsvektor f = ($f_x$, $f_y$, $f_z$) der dreidimensionalen Fouriertransformierten des dreidimensionalen Brechzahlverlaufs n(x,y,z) die Randbedingungen gemäß der vorhergehenden Beschreibung ("verbotene Bereiche"; siehe Seite 9) erfüllt.

Wird im vierten Schritt 404 festgestellt, dass mindestens eine der Ausschlussbedingungen nicht beachtet ist, also eine der beiden Ungleichungen erfüllt ist, wird in einem Rekursionsschritt 405 ein weiteres Modell des optischen Elements berechnet, das lagenweise aus einer Anzahl an Lagen mit geänderten Lagendicken besteht. Dabei werden die Lagendicken nicht nur gleichförmig verändert, sondern die Lagendicken werden ortsabhängig verändert, so dass die Lagendicken vom Zentrum des optischen Elements zum Randbereich hin zu- oder abnehmen. Wie im obigen Schritt 402 werden unter Berücksichtigung der an den Grenzflächen der einzelnen geänderten Lagen zu erwartenden Brechzahl-Inhomogenitäten im weiteren Modell die Dicke des optischen Elements und die Form der zweiten Fläche wiederum so angepasst, dass die weiteren vorgegebenen Eingangsparameter vom weiteren Modell weiterhin erfüllt werden.

Nachfolgend werden der dritte Schritt 403 und der vierte Schritt 404 erneut auf das weitere Modell des optischen Elements angewendet und es wird erneut überprüft, ob die dreidimensionale Fouriertransformierte des dreidimensionalen Brechzahlverlaufs n(x,y,z) des weiteren Modells die Ausschlussbedingungen beachtet. Wird festgestellt, dass mindestens eine der Ausschlussbedingungen weiterhin nicht beachtet ist, wird der Rekursionsschritt 405 erneut vorgenommen. Dabei wird dann weiterhin geprüft, ob hinsichtlich der Nichterfüllung der Ausschlussbedingungen im Vergleich zu dem Ergebnis im vorhergehenden Rekursionsschritt eine Verbesserung hinsichtlich der Nichtbeachtung der Ausschlussbedingungen eingetreten ist, ob also die Abweichungen von $u_{max}$ größer oder kleiner geworden ist. Das Ergebnis dieses Vergleichs wird dann bei der Berechnung eines neuen weiteren Modells im Rekursionsschritt 405 berücksichtigt.

Auf der vorbeschriebenen Weise werden die Rekursionsschritte 403, 404 und 405 solange wiederholt durchgeführt, bis entweder im Schritt 404 festgestellt wird, dass die Ausschlussbedingungen beide gleichzeitig beachtet sind, oder bis im Schritt 404 festgestellt wird, dass bei der letzten Rekursion keine weitere Verbesserung hinsichtlich einer Nichterfüllung der Ausschlussbedingungen verglichen zur vorhergehenden Rekursion mehr erreicht wird. Im letzteren Fall erfolgt ein Abbruch des Verfahrens.

Wird nach Durchlaufen einer Anzahl an Rekursionsschleifen der Rekursionsschritte 403, 404 und 405 festgestellt, dass die Ausschlussbedingungen gleichzeitig beachtet sind, wird in einem Schritt 406 basierend auf dem letzten im Schritt 404 analysierten Modell des optischen Elements ein Steuerprogramm für einen 3D-Drucker 407 erstellt, das den 3D-Drucker 407 so ansteuert, dass die vom 3D-Drucker aufzubringenden Lagendicken und Lagen-Dickenverläufe den Lagendicken und Lagen-Dickenverläufen in diesem im letzten im Schritt 404 analysierten Modell des optischen Elements entsprechen. Dieses Steuerprogramm bewirkt auch eine Ansteuerung der Pumpe im Druckkopf des 3D-Druckers oder die Auswahl einer aktivierten Kanülen-Dicke im Druckkopf des 3D-Druckers als Funktion der jeweiligen dreidimensionalen Ortskoordinate, so dass die Lagendicken und Lagen-Dickenverläufe des im letztmaligen Schritt 404 analysierten Modells des optischen Elements realisiert werden.

In einem nachfolgenden Schritt wird dann das im Schritt 406 erstellte Steuerprogramm an den 3D-Drucker 407 gesendet und das refraktive optische Element 408 gedruckt.

In dem obig beschriebenen Verfahren wird im zweiten Simulationsschritt 402 eine feste Soll-Lagendicke vorgegeben. Bei einer alternativen Ausführungsform kann im zweiten Simulationsschritt 402 basierend auf vorhergehend durchgeführten Simulationen auch bereits ein zweites Modell zugrunde gelegt werden, das bereits eine ortsabhängig variierende Lagendicke aufweist. Die nachfolgenden Schritte 403 bis 406 können dann ebenso wie oben beschrieben durchlaufen werden, mit dem Unterschied, dass in der Regel eine geringere Anzahl an Rekursionsschleifen der Schritte 403, 404 und 405 erforderlich ist.

**Patentansprüche**

1. Refraktives optisches Bauelement (1) mit

    1.1 einem in einem 3D-Druckverfahren hergestellten Grundkörper (10),

        1.1.1. der eine Vorderseite (2) und eine Rückseite (3) und eine senkrecht zur Vorderseite (2) und/oder Rückseite (3) stehende Hauptachse aufweist, und
        1.1.2 der eine Mehrzahl m sich zwischen der Vorderseite (2) und der Rückseite (3) erstreckender optischer Lagen ($5_i$) (i=1..m) aufweist, die jeweils eine Dicke ($d_i$) in Richtung parallel zur Hauptachse im Bereich von 1 $\mu$m bis 100 $\mu$m aufweisen,

    1.2. wobei die Lagen ($5_i$) aufeinander aufgebracht sind,
    1.3. wobei die Anzahl m der optischen Lagen ($5_i$) über die Erstreckung des optischen Bauelements (1) quer zur Hauptachse konstant ist,
    1.4. wobei sich jede der Lagen ($5_i$) in zu der Hauptachse senkrechten Richtungen über einen für alle Lagen ($5_i$) gemeinsamen Bereich erstreckt, der mindestens um einen Faktor 10 größer als die maximale Dicke ($di_{max}$) der jeweiligen Lage ($5_i$) ist,
    1.5. wobei die Dicke ($d_i$) der Lagen ($5_i$) über ihre Erstreckung quer zur Hauptachse variiert, und
    1.6. wobei der Grundkörper (10) einen wenigstens in Richtung parallel zur Hauptachse modulierten Brechzahlverlauf (n = n(x, y, z)) aufweist mit

        1.6.1 einer Mehrzahl von Maxima und Minima,
        1.6.2 einem Abstand zwischen benachbarten Maxima und Minima im Bereich von 0,5 $\mu$m und 100 $\mu$m und
        1.6.3 einem Brechzahlhub $\Delta$n zwischen benachbarten Maxima und Minima im Bereich von $10^{-4}$ und 0,3, und

    1.7. wobei eine Anzahl an Maxima im Brechzahlverlauf innerhalb einer gegebenen Lage (5i) in Richtungen quer zur Hauptachse kleiner ist als 20.

2. Refraktives optisches Element (1) gemäß Anspruch 1, **dadurch gekennzeichnet, dass** es sich um ein Brillenglas handelt.

3. Refraktives optisches Element (1) gemäß einem der vorhergehenden Ansprüche, **dadurch gekennzeichnet, dass** die Anzahl m der optischen Lagen ($5_i$) mindestens 50 beträgt.

4. Refraktives optisches Bauelement (1) gemäß einem der Ansprüche 1 oder 2, **dadurch gekennzeichnet, dass** die Lagen ($5_i$) jeweils Flächennormalen aufweisen, welche um höchstens 67° gegen die Richtung der Hauptachse geneigt sind.

5. Refraktives optisches Bauelement (1) gemäß einem der vorhergehenden Ansprüche, **dadurch gekennzeichnet, dass** der Brechzahlverlauf entlang der Vorderseite homogen ist.

6. Refraktives optisches Bauelement (1) gemäß einem der vorhergehenden Ansprüche, **dadurch gekennzeichnet, dass** der Brechzahlverlauf entlang der Vorderseite und Rückseite homogen ist.

7. Refraktives optische Bauelement (1) gemäß einem der vorhergehenden Ansprüche, **dadurch gekennzeichnet, dass** der Grundkörper (10) in Richtung parallel zur Hauptachse eine maximale Dicke von höchstens 8 mm und in Richtung senkrecht zur Hauptachse eine Ausdehnung von mindestens 1 cm aufweist.

8. Refraktives optische Bauelement (1) gemäß einem der vorhergehenden Ansprüche, **dadurch gekennzeichnet, dass** der Brechzahlverlauf ($n = n(x, y, z)$) entlang der Hauptachse quasiperiodisch ist.

9. Refraktives optische Bauelement (1) gemäß einem der Ansprüche 1 bis 8, **dadurch gekennzeichnet, dass** der Brechzahlverlauf ($n = n(x, y, z)$) entlang der ersten Richtung periodisch ist.

10. Refraktives optische Bauelement (1) gemäß einem der vorhergehenden Ansprüche, **dadurch gekennzeichnet, dass** zwischen zwei aneinander angrenzenden Lagen ($5_i$, $5_j$) verlaufende Grenzflächen ($6_{ij}$) jeweils in einer Hauptrichtung (4) einen Abstand dv zu einer Vorderseite (2) und einen Abstand $d_R$ zu einer Rückseite (3) des Grundkörpers (10) aufweist, wobei ein Verhältnis dieser Abstände dv : $d_R$ über die Ausdehnung des Grundkörpers in Richtung quer zur Hauptrichtung (4) um höchstens 30 % variiert.

11. Refraktives optische Bauelement gemäß einem der vorhergehenden Ansprüche, **dadurch gekennzeichnet, dass** ausgehend von einem beliebigen Punkt auf einer Vorderseite (2) des Grundkörpers (10) eine Abfolge benachbarter Grenzflächen ($6_{ij}$, $6_{jj+1}$) in Hauptrichtung (4) Abstände aufweisen, welche um höchstens 30 % variieren.

12. Brillenglas hergestellt aus einem refraktiven optischen Bauelement (1) gemäß einem der vorhergehenden Ansprüche.

13. Verfahren der Herstellung eines refraktiven optischen Bauelements (1) gemäß einem der Ansprüche 1 bis 11 umfassend die folgenden Schritte:

    13. 1. Bereitstellen eines Geräts zum 3D-Druck eines Grundkörpers (10) aus einem transparenten Material,
    13. 2. Bereitstellen von Baudaten des herzustellenden Grundkörpers (10),

        13. 2.1. der eine Vorderseite (2) und eine Rückseite (3) und eine senkrecht zur Vorderseite (2) und/oder Rückseite (3) stehende Hauptachse aufweist, und
        13. 2.2. der eine Mehrzahl m sich zwischen der Vorderseite (2) und der Rückseite (3) erstreckender optischer Lagen ($5_i$) (i=1..m) aufweist, die jeweils eine Dicke ($d_i$) in Richtung parallel zur Hauptachse aufweisen,

    13. 3. wobei sich jede der Lagen ($5_i$) in zu der Hauptachse senkrechten Richtungen über einen für alle Lagen ($5_i$) gemeinsamen Bereich erstreckt, der mindestens um einen Faktor 10 größer als die maximale Dicke ($d_{i\,max}$) der jeweiligen Lage ($5_i$) ist,
    13. 4. wobei die Dicke ($d_i$) der Lagen ($5_i$) über ihre Erstreckung quer zur Hauptachse variiert, und
    13. 5. wobei die Dicke ($d_i$) der Lagen ($5_i$) im Bereich von 1 $\mu$m bis 100 $\mu$m liegt, 13. 6. Bereitstellen eines Trägers,
    13. 7. sukzessives Aufbringen von Material auf den Träger gemäß der bereitgestellten Baudaten,
    13. 8. wobei die Lagen ($5_i$) aufeinander aufgebracht werden,
    13. 9. wobei die Anzahl m der optischen Lagen ($5_i$) über die Erstreckung des optischen Bauelements (1) quer zur Hauptachse konstant ist,
    13.10. wobei der Grundkörper (10) einen wenigstens in Richtung parallel zur Hauptachse modulierten Brechzahlverlauf ($n = n(x, y, z)$) aufweist mit einer Mehrzahl von Maxima und Minima, einem Abstand zwischen benachbarten Maxima und Minima im Bereich von 0,5 $\mu$m und 100 $\mu$m und einem Brechzahlhub $\Delta$n zwischen benachbarten Maxima und Minima im Bereich von $10^{-4}$ und 0,3, und

13.11. wobei eine Anzahl an Maxima im Brechzahlverlauf innerhalb einer gegebenen Lage ($5_i$) in Richtungen quer zur Hauptachse kleiner ist als 20.

14. Verfahren gemäß Anspruch 13, **dadurch gekennzeichnet, dass** die Anzahl m der optischen Lagen ($5_i$) mindestens 50 beträgt.

## Claims

1. Refractive optical component (1) comprising

    1.1 a main body (10) produced in a 3D printing process,

        1.1.1. which has a front side (2) and a back side (3) and a principal axis perpendicular to the front side (2) and/or back side (3), and
        1.1.2. which has a plurality m of optical layers ($5_i$) (i=1..m) extending between the front side (2) and the back side (3) and each having a thickness ($d_i$) in the range from 1 $\mu$m to 100 $\mu$m in a direction parallel to the principal axis,

    1.2. wherein the layers ($5_i$) are applied one on top of the other,
    1.3. wherein the number m of optical layers ($5_i$) is constant over the extent of the optical component (1) transversely to the principal axis,
    1.4. wherein each of the layers ($5_i$) extends over a region common to all the layers ($5_i$) in directions perpendicular to the principal axis, said common region being greater than the maximum thickness ($d_{i\,max}$) of the respective layer ($5_i$) at least by a factor of 10,
    1.5. wherein the thickness ($d_i$) of the layers ($5_i$) varies over the extent thereof transversely to the principal axis, and
    1.6. wherein the main body (10) has a refractive index profile (n = n(x, y, z)), modulated at least in a direction parallel to the principal axis, with

        1.6.1. a plurality of maxima and minima,
        1.6.2 a distance between adjacent maxima and minima ranging between 0.5 $\mu$m and 100 $\mu$m and
        1.6.3 a refractive index difference $\Delta$n between adjacent maxima and minima ranging between $10^{-4}$ and 0.3, and

    1.7. wherein a number of maxima in the refractive index profile within a given layer ($5_i$) in directions transversely to the principal axis is less than 20.

2. Refractive optical component (1) according to Claim 1, **characterized in that** it is a spectacle lens.

3. Refractive optical component (1) according to either of the preceding claims, **characterized in that** the number m of optical layers ($5_i$) is at least 50.

4. Refractive optical component (1) according to either of Claims 1 and 2, **characterized in that** the layers ($5_i$) in each case have surface normals which are inclined by at most 67° relative to the direction of the principal axis.

5. Refractive optical component (1) according to any of the preceding claims, **characterized in that** the refractive index profile is homogeneous along the front side.

6. Refractive optical component (1) according to any of the preceding claims, **characterized in that** the refractive index profile is homogeneous along the front side and back side.

7. Refractive optical component (1) according to any of the preceding claims, **characterized in that** the main body (10) has a maximum thickness of at most 8 mm in a direction parallel to the principal axis and an extent of at least 1 cm in a direction perpendicular to the principal axis.

8. Refractive optical component (1) according to any of the preceding claims, **characterized in that** the refractive index profile (n = n(x, y, z)) is quasiperiodic along the principal axis.

9. Refractive optical component (1) according to any of Claims 1 to 8, **characterized in that** the refractive index profile (n = n(x, y, z)) is periodic along the first direction.

10. Refractive optical component (1) according to any of the preceding claims, **characterized in that** interfaces ($6_{ij}$) between two layers ($5_i$, $5_j$) adjoining one another in each case in a principal direction (4) are at a distance $d_V$ from a front side (2) and a distance $d_R$ from a back side (3) of the main body (10), wherein a ratio of these distances $d_V$:$d_R$ varies by at most 30% over the extent of the main body in a direction transversely to the principal direction (4).

11. Refractive optical component according to any of the preceding claims, **characterized in that** proceeding from an arbitrary point on a front side (2) of the main body (10) a sequence of adjacent interfaces ($6_{ij}$, $6_{jj+1}$) in the principal direction (4) are at distances which vary by at most 30%.

12. Spectacle lens produced from a refractive optical component (1) according to any of the preceding claims.

13. Method for producing a refractive optical component (1) according to any of Claims 1 to 11, comprising the following steps:

    13.1. providing a device for 3D printing a main body (10) made from a transparent material,
    13.2. providing construction data relating to the main body (10) to be produced,

        13.2.1. which has a front side (2) and a back side (3) and a principal axis perpendicular to the front side (2) and/or back side (3), and
        13.2.2. which has a plurality m of optical layers ($5_i$) (i=1..m) extending between the front side (2) and the back side (3) and each having a thickness ($d_i$) in a direction parallel to the principal axis,

    13.3. wherein each of the layers ($5_i$) extends over a region common to all the layers ($5_i$) in directions perpendicular to the principal axis, said common region being greater than the maximum thickness ($d_{i\ max}$) of the respective layer ($5_i$) at least by a factor of 10,
    13.4. wherein the thickness ($d_i$) of the layers ($5_i$) varies over the extent thereof transversely to the principal axis, and
    13.5. wherein the thickness ($d_i$) of the layers ($5_i$) is in the range of 1 $\mu$m to 100 $\mu$m,
    13.6. providing a carrier,
    13.7. successively applying material to the carrier in accordance with the construction data provided,
    13.8. wherein the layers ($5_i$) are applied one on top of the other,
    13.9. wherein the number m of optical layers ($5_i$) is constant over the extent of the optical component (1) transversely to the principal axis,
    13.10. wherein the main body (10) has a refractive index profile (n = n(x, y, z)), modulated at least in a direction parallel to the principal axis, with a plurality of maxima and minima, a distance between adjacent maxima and minima ranging between 0.5 $\mu$m and 100 $\mu$m and a refractive index difference $\Delta$n between adjacent maxima and minima ranging between $10^{-4}$ and 0.3, and
    13.11. wherein a number of maxima in the refractive index profile within a given layer ($5_i$) in directions transversely to the principal axis is less than 20.

14. Method according to Claim 13, **characterized in that** the number m of optical layers ($5_i$) is at least 50.

**Revendications**

1. Composant optique réfractif (1) comprenant

    1.1 un corps de base (10) qui est fabriqué selon un procédé d'impression 3D et qui comporte

        1.1.1. un côté avant (2) et un côté arrière (3) et un axe principal perpendiculaire au côté avant (2) et/ou au côté arrière (3), et
        1.1.2 une pluralité m de couches optiques ($5_i$) (i = I...m) qui s'étendent entre le côté avant (2) et le côté arrière (3) et qui ont chacune une épaisseur ($d_i$) dans la direction parallèle à l'axe principal dans la gamme

de 1 μm à 100 μm,

1.2. les couches ($5_i$) étant appliquées les unes sur les autres,

1.3. le nombre m de couches optiques ($5_i$) étant constant sur l'extension du composant optique (1) transversalement à l'axe principal,

1.4. chacune des couches ($5_i$) s'étendant dans des directions perpendiculaires à l'axe principal sur une zone qui est commune à toutes les couches ($5_i$) et qui est supérieure d'au moins un facteur 10 à l'épaisseur maximale ($d_{i\,max}$) de la couche respective ($5_i$),

1.5. l'épaisseur ($d_i$) des couches ($5_i$) variant sur leur extension transversale à l'axe principal, et

1.6. le corps de base (10) présentant une courbe d'indice de réfraction ($n = n(x, y, z)$) qui est modulée au moins dans la direction parallèle à l'axe principal et qui présente

1.6.1 une pluralité de maxima et de minima,

1.6.2 une distance entre maxima et minima adjacents comprise entre 0,5 μm et 100 μm et

1.6.3 une excursion d'indices de réfraction Δn entre des maxima et des minima adjacents dans la gamme de $10^{-4}$ et 0,3, et

1.7. un nombre de maxima dans la courbe d'indice de réfraction à l'intérieur d'une couche donnée ($5_i$) dans des directions transversales à l'axe principal étant inférieur à 20.

2. Composant optique réfractif (1) selon la revendication 1, **caractérisé en ce qu'**il s'agit d'un verre de lunettes.

3. Composant optique réfractif (1) selon l'une des revendications précédentes, **caractérisé en ce que** le nombre m de couches optiques ($5_i$) est d'au moins 50.

4. Composant optique réfractif (1) selon l'une des revendications 1 ou 2, **caractérisé en ce que** les couches ($5_i$) ont chacune des normales à la surface inclinées d'au plus 67° par rapport à la direction de l'axe principal.

5. Composant optique réfractif (1) selon l'une des revendications précédentes, **caractérisé en ce que** la courbe d'indices de réfraction est homogène du côté avant.

6. Composant optique réfractif (1) selon l'une des revendications précédentes, **caractérisé en ce que** la courbe d'indices de réfraction est homogène le long du côté avant et du côté arrière.

7. Composant optique réfractif (1) selon l'une des revendications précédentes, **caractérisé en ce que** le corps de base (10) a une épaisseur maximale d'au plus 8 mm dans la direction parallèle à l'axe principal et une extension d'au moins 1 cm dans la direction perpendiculaire à l'axe principal.

8. Composant optique réfractif (1) selon l'une des revendications précédentes, **caractérisé en ce que** la courbe d'indices de réfraction ($n = n(x, y, z)$) est quasi-périodique le long de l'axe principal.

9. Composant optique réfractif (1) selon l'une des revendications 1 à 8, **caractérisé en ce que** la courbe d'indices de réfraction ($n = n(x, y, z)$) est périodique le long de la première direction.

10. Composant optique réfractif (1) selon l'une des revendications précédentes, **caractérisé en ce que** des surfaces limites ($6_{ij}$) qui s'étendent entre deux couches adjacentes ($5_i$, $5_j$) sont chacune à une distance $d_v$ d'un côté avant (2) et à une distance $d_R$ d'un côté arrière (3) du corps de base (10) dans une direction principale (4), un rapport de ces distances $d_v$:$d_R$ variant d'au plus 30 % sur l'extension du corps de base dans une direction transversale à la direction principale (4).

11. Composant optique réfractif selon l'une des revendications précédentes, **caractérisé en ce qu'**une succession de surfaces limites adjacentes ($6_{ij}$, $6_{ij+1}$) dans la direction principale (4) sont à des distances, qui varient d'au plus 30 %, de tout point d'un côté avant (2) du corps de base (10).

12. Verre de lunettes réalisé à partir d'un composant optique réfractif (1) selon l'une des revendications précédentes.

13. Procédé de réalisation d'un composant optique réfractif (1) selon l'une des revendications 1 à 11, ledit procédé comprenant les étapes suivantes :

13.1. fournir un dispositif d'impression en 3D d'un corps de base (10) à partir d'une matière transparente,

13.2. fournir des données de construction du corps de base (10) à réaliser qui comporte

13.2.1. un côté avant (2) et un côté arrière (3) et un axe principal perpendiculaire au côté avant (2) et/ou au côté arrière (3), et

13.2.2. une pluralité m de couches optiques ($5_i$) (i = l...m) qui s'étendent entre le côté avant (2) et le côté arrière (3) et qui ont chacune une épaisseur ($d_i$) dans la direction parallèle à l'axe principal,

13.3. chacune des couches ($5_i$) s'étendant dans des directions perpendiculaires à l'axe principal sur une zone qui est commune à toutes les couches ($5_i$) et qui est supérieure d'au moins un facteur 10 à l'épaisseur maximale ($d_{i\,max}$) de la couche respective ($5_i$),

13.4. l'épaisseur ($d_i$) des couches ($5_i$) variant sur leur extension transversale à l'axe principal, et

13.5. l'épaisseur ($d_i$) des couches ($5_i$) étant située dans la gamme de 1 $\mu$m à 100 $\mu$m,

13.6. fournir un support,

13.7. appliquer successivement la matière sur le support selon les données de construction fournies, 13.8. les couches ($5_i$) étant appliquées les unes sur les autres,

13.9. le nombre m de couches optiques ($5_i$) étant constant sur l'extension du composant optique (1) transversalement à l'axe principal,

13.10. le corps de base (10) présentant une courbe d'indices de réfraction (n = n(x, y, z)) qui est modulée au moins dans la direction parallèle à l'axe principal et qui comporte une pluralité de maxima et de minima, une distance entre des maxima et des minima adjacents comprise entre 0,5 $\mu$m et 100 $\mu$m et une excursion d'indices de réfraction $\Delta$n entre des maxima et des minima adjacents compris entre $10^{-4}$ et 0,3, et

13.11. un nombre de maxima dans la courbe d'indices de réfraction à l'intérieur d'une couche donnée ($5_j$) dans des directions transversales à l'axe principal étant inférieur à 20.

**14.** Procédé selon la revendication 13, **caractérisé en ce que** le nombre m de couches optiques ($5_i$) est d'au moins 50.

Fig. 1

Fig. 2

Fig. 3

400 ⟶ [ ]

401 ⟶ [ ]

402 ⟶ [ ]

405

403 ⟶ [ ]          [ ]

404 ⟶ [ ]  NEIN

JA

406 ⟶ [ ]

407 ⟶ [ ]

408 ⟶ [ ]

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015092016 A1
- US 20050046957 A1
- WO 2016188930 A1
- EP 0341998 A1
- WO 2008051578 A2
- WO 2008051592 A2

- US 2015153589 A1
- DE 102009004377 B4
- DE 102009004379 B4
- DE 102009004380 B4
- US 2016311184 A1
- US 20100110132 A1